(19) Europäisches Patentamt European Patent Office Office européen des brevets

(11) **EP 2 987 695 B1**

(12) **EUROPEAN PATENT SPECIFICATION**

(45) Date of publication and mention of the grant of the patent:
**13.02.2019 Bulletin 2019/07**

(51) Int Cl.:
*B60W 10/02* (2006.01)        *B60W 10/06* (2006.01)
*B60W 30/20* (2006.01)        *B60W 30/19* (2012.01)
*F16H 61/04* (2006.01)        *F16H 63/50* (2006.01)

(21) Application number: **15174961.1**

(22) Date of filing: **02.07.2015**

(54) **CONTROL OF A TORQUE FROM AN ENGINE**

DREHMOMENTSTEUERUNG FÜR EINEN VERBRENNUNGSMOTOR

CONTRÔLE DU COUPLE D'UN MOTEUR THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2014 SE 1450956**

(43) Date of publication of application:
**24.02.2016 Bulletin 2016/08**

(73) Proprietor: **Scania CV AB**
**151 87 Södertälje (SE)**

(72) Inventors:
• **UDD, Jonas**
**112 25 Stockholm (SE)**

• **KJELL, Anders**
**178 38 Ekerö (SE)**

(74) Representative: **Scania CV AB**
**Patents, GP 117kv**
**151 87 Södertälje (SE)**

(56) References cited:
WO-A1-2013/089619        WO-A2-02/070923
DE-A1- 10 135 327        DE-A1-102005 049 178
DE-A1-102008 036 166        GB-A- 2 297 369
US-A1- 2005 239 595        US-A1- 2013 310 219

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to a system arranged for the control of a time derivative $\dot{T}q_{fw}$ for a dynamic torque according to the preamble to claim 1. The present invention also relates to a method for the control of a time derivative $\dot{T}q_{fw}$ for a dynamic torque according to the preamble to patent claim 15, and a computer program and a computer program product, which implement the method according to the invention.

### Background

US2005239595 discloses a system and a method according to the preamble of claims 1 and 14, for controlling the shifting of an automatic manual transmission based on observer-based timing of different phases of the shift process. The observer-based control strategy includes simultaneous management of the engine throttle and transmission actuators. The torque characteristics of the transmission are also taken into consideration during control of the engine throttle. The control strategy uses mathematical models called observers to monitor the value of inherent properties attributable to specific actuators and to provide signals used to implement parallel task execution.

US2013310219 discloses a method of commanding a synchronous gear shift beginning by receiving a request to shift from a third gear to a first gear, and skipping a second gear having a gear ratio between the gear ratio of the first gear and the gear ratio of the third gear. Subsequently the method includes: reducing a torque command to a predetermined value; opening a clutch disposed on the input shaft of the transmission to decouple the transmission from the engine; transitioning the engine from a torque-control mode into a speed-control mode; commanding the engine to rotate at a speed dictated by the motion of the vehicle and the gear ratio of the first gear; closing the clutch to couple the transmission and the engine; and transitioning the engine back into the torque-control mode.

US2008248922 relates to a method for controlling an automatic transmission, which allows a gear change and, here in particular, downshifting with minimum traction interruption while the phase of reduction of the drive torque of the drive motor, the phase interruption of the frictional connection phase in the automatic transmission, and the phase of rotational speed adjustment in the transmission input shaft are designed for a suitable target rotational speed such that they overlap at least in part. With interruption of the frictional connection in the automatic transmission, the drive motor transmits a drive torque to the input shaft of the automatic transmission via the main clutch, which achieves a change in the rotational speed of the input shaft of the transmission in the direction of the synchronous speed of the new gear.

The following background description constitutes a description of the background to the present invention, which does not, however, necessarily constitute prior art.

Vehicles, such as for example cars, buses and trucks are driven forward by an engine torque produced by an engine in the vehicle. This engine torque is provided to the vehicle's driving wheels through a powertrain in the vehicle. The powertrain contains a range of inertias, torsional compliances and dampening components, meaning that the powertrain, to a varying degree, may have an impact on the engine torque being transferred to the driving wheels. Thus, the powertrain has a torsional compliance/flexibility and a play, which means that oscillations in torque and/or revolutions, so called powertrain oscillations, may occur in the vehicle when the vehicle, for example, sets off once a torque has been requested from the engine. These oscillations in torque and/or revolutions occur when forces, having been built up in the powertrain in the period between the engine providing the torque and the vehicle moving off, are released as the vehicle moves off. Powertrain oscillations may make the vehicle rock longitudinally, which is described in further detail below. These rocking movements in the vehicle are very disruptive for the driver of the vehicle.

Therefore, in some prior art solutions preventing strategies have been used at the request of engine torque, in order to reduce these powertrain oscillations. Such strategies may utilise limiting torque ramps when the engine torque is requested, whereat these torque ramps have been adapted so that the requested engine torque is limited in such a way, that the powertrain oscillations are reduced, or do not occur at all.

### Brief description of the invention

The torque ramps that are used today when an engine torque is requested, thus introduce a limit to how the torque may be requested from the engine in the vehicle. This limitation is necessary under the solutions of prior art, in order to reduce the disruptive powertrain oscillations. Allowing the driver and/or, for example, a cruise control to freely to request a torque would, with current art systems, often give rise to considerable and disruptive powertrain oscillations, which is why limiting torque ramps are used.

Often a specific torque increase is desirable, for example following a change of gear in a gearbox in the vehicle, or when moving off from a standstill. In prior art solutions, these torque increases have been limited by defined torque ramps to avoid powertrain oscillations, which has meant that it takes a relatively long time to achieve the specific desired torque increase. In addition, the play in the powertrain must be wound up before any torque may be issued to the driving wheels, if the powertrain is in a state within the play. Below is a detailed description of how the play in the powertrain arises, and how it impacts the powertrain.

The winding up of the play and the torque build-up limited by the torque ramps means that prior art solutions deliver a sluggish and slow torque build-up to the vehicle's driver, which may entail that the vehicle is perceived as weak, slow and/or not powerful. At gear shifting, this may entail that the shift operation is perceived as slow, since the torque build-up after the shift of gears is time consuming.

In addition, static torque ramps have a number of disadvantages, relating to the fact that they are not optimised to all driving modes that the vehicle may be exposed to. For certain driving modes, the static and limiting torque ramps give rise to a reduction in vehicle performance, as, due to the torque ramp, the requested torque is unnecessarily low for driving modes, wherein it would have been possible to request more engine torque without the occurrence of powertrain oscillations. For other driving modes, the torque ramp does not limit the requested torque sufficiently, which means that powertrain oscillations occur, and therefore rocking movements in the vehicle. Therefore, the use of torque ramps, for certain driving modes, provides non-optimal torques, which may give rise to an unnecessary reduction in vehicle performance and/or rocking that reduces the comfort, caused by powertrain oscillations.

It is therefore one objective of the present invention, to provide a method and a system for control of a time derivative $\dot{T}q_{fw}$, for a dynamic torque which at least partly solve these problems.

This objective is achieved through the above-mentioned system in accordance with the characteristics set out in the appended patent claims. The objective is also achieved through the above-mentioned method according to the characteristics of the appended claims, and the above mentioned computer program and computer program product.

The present invention relates to a system and a method for the control of a change of a time derivative $\dot{T}q_{fw}$ for a dynamic torque, which is provided to an output shaft from an engine in a vehicle, which is driven with a driving gear activated in a gearbox in the vehicle.

The invention is carried out when a clutch in the vehicle is initially temporarily open, following which the clutch position is controlled as described below.

The system according to the present invention comprises a first determining unit. The first determining unit is arranged for the determination of a current speed difference $\Delta\omega_{pres}$ between a first end of a powertrain in a vehicle, rotating with an engine speed $\omega_e$, and a second end of the powertrain, rotating with a rotational speed of at least one driving wheel $\omega_{wheel}$ in the vehicle.

The system also comprises a torque control unit. The torque control unit is arranged to carry out a control of the engine speed $\omega_e$, whereat the control of the engine speed $\omega_e$ is carried out in such a manner that the current speed difference $\Delta\omega_{pres}$ is controlled towards a desired speed difference $\Delta\omega_{des}$ between the engine speed $\omega_e$ and the rotational speed of the at least one driving wheel $\omega_{wheel}$.

The system also comprises a clutch control unit. The clutch control unit is arranged to control the clutch towards a clutch position $C_{closed}$, wherein a rotational speed of an input shaft in the gearbox $\omega_{gear\_in}$ and the engine speed $\omega_e$ are substantially equal. The control of the clutch is carried out so that such clutch position $C_{closed}$ is achieved, substantially when the current speed difference $\Delta\omega_{pres}$ reaches the desired speed difference $\Delta\omega_{des}$.

The desired speed difference $\Delta\omega_{des}$ is here proportionate to a desired value for the time derivative $\dot{T}q_{fw\_des}$ for the dynamic torque, whereat the control of the clutch position is carried out in such a manner that the desired speed difference $\Delta\omega_{des}$ results in a control of such time derivative towards its desired value $\dot{T}q_{fw\_des}$.

The present invention thus provides a control of the time derivative/gradient $\dot{T}q_{fw}$ for the dynamic torque. This achieved/provided direction/gradient, i.e. the time derivative $\dot{T}q_{fw}$ for the dynamic torque, may then be used as a suitable initial value for further adjustment of the dynamic torque $Tq_{fw}$.

The control of the time derivative $\dot{T}q_{fw}$ for the dynamic torque according to the present invention, may, for example, be used in connection with the ramping up after a shift operation and/or at other events/driving modes when the dynamic torque needs to be increased.

When the present invention is used, the desired time derivative $\dot{T}q_{fw\_des}$ for the dynamic torque is obtained directly when the clutch is closed. This takes place e.g. at shifting, before the engine speed $\omega_e$ and the wheels' speed $\omega_{wheel}$ have been synchronised to the same rotational speed, that is to say before the engine speed $\omega_e$ has dropped to the rotational speed of the wheels $\omega_{wheel}$.

Thus, the desired torque increase, that is to say the desired time derivative $\dot{T}q_{fw\_des}$, is obtained very quickly when the present invention is used, which results in faster gear shifts, and which also means the vehicle makes a more powerful impression.

Through the present invention, a more efficient and reliable winding up of potential play in the powertrain is also achieved. A play in the powertrain may, for example, arise when two cogs in the powertrain, such as for example the cogs in two cogwheels in the gearbox, fail to engage with each other for a brief period, and subsequently engage with each other again. A play may thus, for example, occur at a transition between dragging the engine and an acceleration/torque request when engaging the clutch, and/or during a shift operation. Since an efficient winding up of such play may be obtained with the use of the present invention, a rapid torque build-up may be obtained.

According to the present invention, the profile of the requested torque $Tq_{demand}$ is formed in such a manner that the dynamic torque $Tq_{fw}$ has an, at least in part, substantially even and non-oscillating profile, or does at least provide oscillations with significantly lower amplitudes than prior art. The present invention results in oscillations, which do not have a negative impact on the comfort in the vehicle. In this way, powertrain oscillations may be reduced in number and/or size for a number of driving modes, wherein previous controls of the requested torque $Tq_{demand}$ would have resulted in problematic rocking of the vehicle. These driving modes comprise, for example, a start of a request for a torque from the engine, a so-called "TIPIN". In driving modes comprising play in the powertrain, the present invention also reduces powertrain oscillations, so that rocking of the vehicle is prevented, and the driver's comfort increases.

**Brief list of figures**

The invention will be illustrated in more detail below, along with the enclosed drawings, where similar references are used for similar parts, and where:

Figure 1 shows an example vehicle,

Figure 2 shows a flow chart for a method according to one embodiment of the present the invention,

Figure 3 shows a control device, in which a method according to the present invention may be implemented.

Figures 4a-b schematically show a block diagram for a prior art fuel injection systems, and a fuel injection system comprising a control system according to the present invention,

Figures 5a-b show a driving mode when a prior art control is applied, and when a control according to this invention is applied, respectively,

Figure 6 schematically shows torque transmitted by the clutch,

Figures 7a-c schematically illustrate a play in the powertrain.

**Description of preferred embodiments**

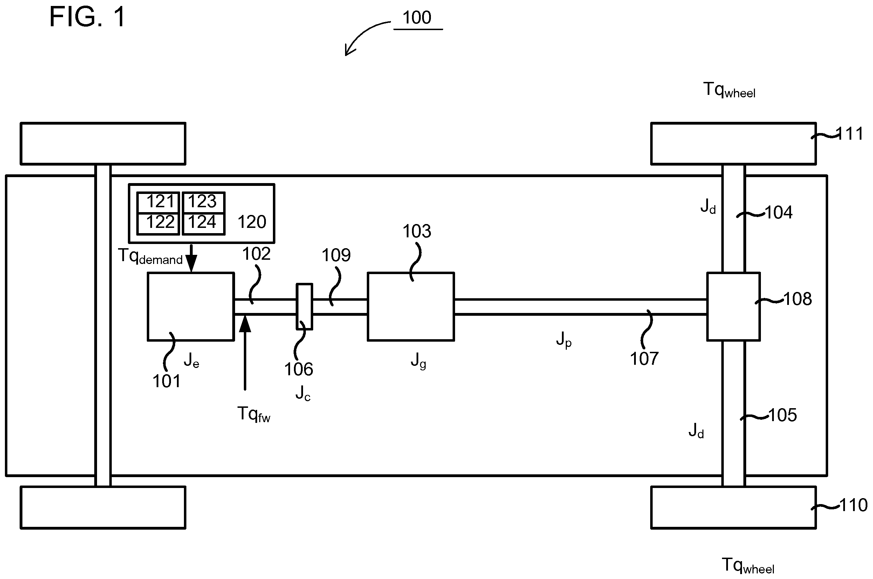

Figure 1 schematically shows a heavy example vehicle 100, such as a truck, a bus or similar, which will be used to explain the present invention. The present invention is, however, not limited to use in heavy goods vehicles, but may also be used in lighter vehicles such as cars. The vehicle 100, shown schematically in Figure 1, comprises a pair of driving wheels 110, 111. The vehicle furthermore comprises a powertrain with an engine 101, which may be, for example, a combustion engine, an electrical motor or a combination of these, a so called hybrid. The engine 101 may, for example, in a customary fashion, via an output shaft 102 on the engine 101, be connected with a gearbox 103, via a clutch 106 and an input shaft 109 connected to the gearbox 103. An output shaft 107 from the gearbox 103, also known as a propeller shaft, drives the driving wheels 110, 111 via a final gear 108, such as e.g. a customary differential, and drive shafts 104, 105 connected with said final gear 108. A control device 120 is schematically illustrated as providing control signals to the engine 101. As described below, the control device may comprise a first determining unit 121, and a torque control unit 122, and a clutch control unit 123. According to one embodiment the control device 120 may also comprise a second determining unit 124. These units are described in more detail below.

When a driver of the motor vehicle 100 increases a torque request to the engine 101, for example by inputting via an input means, such as the depressing of an accelerator pedal, this may result in a relatively rapid change in the powertrain's torque. This torque is resisted by the driving wheels 110, 111, due to their friction against the ground and the rolling resistance of the motor vehicle. The drive shafts 104, 105 are hereby exposed to a relatively powerful torque.

For reasons of cost and weight, among others, the drive shafts 104, 105 are not normally dimensioned to handle this severe stress without being impacted. In other words, the drive shafts 104, 105 have a relatively large torsional compliance, at least in relation to the stress on the drive shafts 104, 105. The propeller shaft 107 may also have a corresponding, relatively great torsional compliance. The other components of the drive shaft may have some form of corresponding torsional compliance. Due to the relative torsional compliance of the drive shafts 104, 105, they act as torsion springs between the drive shafts 110, 111 and the final gear 108. In the same way, the other torsional compliances in the powertrain also act as torsion springs between the location of the various components and the driving wheels 110, 111. Once the rolling resistance of the vehicle no longer manages to hold back the torque from the powertrain, the motor vehicle 100 will start to roll, whereby the force in the drive shafts 104, 105 acting as a torsion spring will be released.

When the motor vehicle 100 starts to set off, this released force may cause powertrain oscillations, meaning that the motor vehicle starts to rock in a longitudinal direction, i.e. in the driving direction. The driver of the motor vehicle experiences this rocking as very uncomfortable.

A driver desires a soft and comfortable driving experience and when such a comfortable driving experience is achieved, this gives a sense of the motor vehicle being a refined and well developed product. Therefore, uncomfortable powertrain oscillations should if possible be avoided.

The present invention relates to the control of a time derivative $\dot{T}q_{fw}$ for a torque $Tq_{demand}$ requested from the engine 101. The engine 101 provides a dynamic torque $Tq_{fw}$ in response to a torque $Tq_{demand}$ requested from the engine, whereat this dynamic torque $Tq_{fw}$ constitutes a torque at the flywheel, connecting the clutch 106 to the engine's output shaft 102. This dynamic torque is the torque $Tq_{fw}$, which, through a gear ratio $i$ for the powertrain, relates to a dynamic wheel torque $Tq_{wheel}$, supplied to the driving wheels 110, 111 of the vehicle. The gear ratio $i$ here constitutes the total gear ratio of the powertrain, comprising for example the gearbox ratio for a specific gear. In other words, a requested engine torque $Tq_{demand}$ results in a dynamic wheel torque $Tq_{wheel}$ at the vehicle's driving wheels 110, 111. The present invention relates to a system, arranged for control of a time derivative $\dot{T}q_{fw}$ for a dynamic torque, which is provided to an output shaft 102 from an engine 101 in a vehicle. The vehicle is here driven with a driving gear activated in the gearbox 103 in the vehicle, whereat the clutch in the vehicle is initially temporarily open, following which the clutch position is controlled towards a closed clutch position, according to different embodiments of the present invention. The system according to the present invention comprises a first determining unit 121. The first determining unit 121 is arranged for the determination of a current speed difference $\Delta\omega_{pres}$ between a first end of the powertrain in a vehicle, rotating with an engine speed $\omega_e$, and a second end of the powertrain, rotating with a rotational speed of at least one driving wheel $\omega_{wheel}$ in the vehicle.

The system also comprises a torque control unit 122. The torque control unit 122 is arranged to carry out a control of the engine speed $\omega_e$, whereat the control of the engine speed $\omega_e$ is carried out in such a manner that the current speed difference $\Delta\omega_{pres}$ is controlled towards a desired speed difference $\Delta\omega_{des}$ between the engine speed $\omega_e$ and the rotational speed of the at least one driving wheel $\omega_{wheel}$. As described in further detail below, the desired speed difference $\Delta\omega_{des}$ is proportionate to a desired value for the time derivative $\dot{T}q_{fw\_des}$ for the dynamic torque.

The system also comprises a clutch control unit 123. The clutch control unit 123 is arranged to control the clutch toward a clutch position $C_{closed}$, for which a rotational speed of an input shaft 109 in the gearbox $\omega_{gear\_in}$ and the engine speed $\omega_e$ are substantially equal. The control of the clutch is carried out in such a manner that such clutch position $C_{closed}$ is achieved, substantially when the current speed difference $\Delta\omega_{pres}$ reaches the desired speed difference $\Delta\omega_{des}$. Since the desired speed difference $\Delta\omega_{des}$ is proportionate to the desired value for the time derivative $\dot{T}q_{fw\_des}$ for the dynamic torque, the control of the clutch position, which directly gives the desired speed difference $\Delta\omega_{des}$, also corresponds to a control of the time derivative towards its desired value $\dot{T}q_{fw\_des}$. This achieved value $\dot{T}q_{fw\_des}$ for the time derivative $\dot{T}q_{fw}$ for the dynamic torque may then be used as a suitable initial value for further control of the dynamic torque $Tq_{fw}$.

In addition, the invention relates to a motor vehicle 100, for example a passenger car, comprising at least one system for control of a time derivative $\dot{T}q_{fw}$ for a dynamic torque according to the present invention.

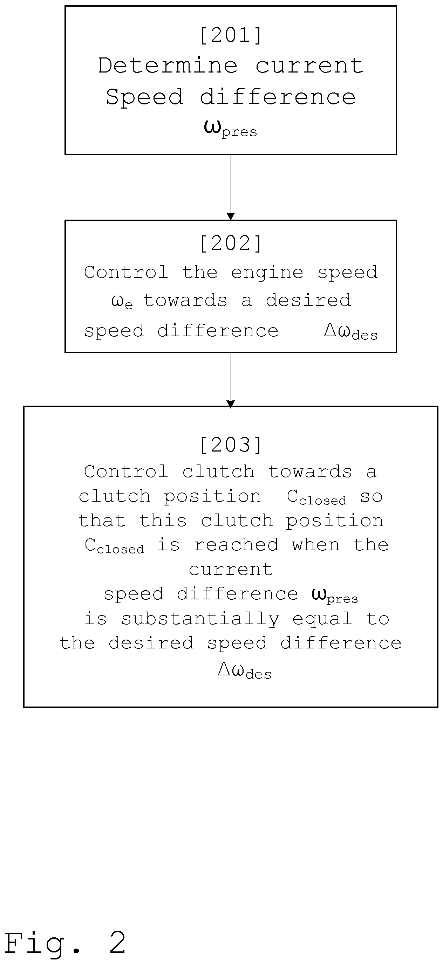

Figure 2 shows a flow chart for the method for control of a time derivative $\dot{T}q_{fw}$ for a dynamic torque, according to an embodiment of the present invention.

In a first step 201, a current rotational speed difference $\Delta\omega_{pres}$ is determined, for example with the use of the first determining unit 121, between a first and a second end of a powertrain in the vehicle. The first end rotates with the engine speed $\omega_e$ and the second end rotates with a rotational speed of at least one driving wheel $\omega_{wheel}$ in the vehicle.

In a second step 202, the engine speed $\omega_e$ is controlled, for example with the use of the torque control unit 122, in such a manner that the current speed difference $\Delta\omega_{pres}$ is controlled towards a desired speed difference $\Delta\omega_{des}$ between the engine speed $\omega_e$ and the rotational speed of the at least one driving wheel $\omega_{wheel}$.

In a third step 203, the clutch 106 is controlled, for example with the use of the clutch control unit 123, towards a clutch position $C_{closed}$, for which a rotational speed of the input shaft 109 $\omega_{gear\_in}$ comprised in the gearbox 103 and the engine speed $\omega_e$ are substantially equal, that is to say towards a substantially closed position for the clutch 103. This clutch position $C_{closed}$ is controlled to be reached substantially when the current speed difference $\Delta\omega_{pres}$ reaches the desired speed difference $\Delta\omega_{des}$, that is to say when the current speed difference $\Delta\omega_{pres}$ is substantially equal to the desired speed difference $\Delta\omega_{des}$.

When the present invention is used, the desired time derivative $\dot{T}q_{fw\_des}$ for the dynamic torque is obtained directly when the clutch is closed, since the time derivative $\dot{T}q_{fw\_des}$ for the dynamic torque is proportionate to the desired speed difference $\Delta\omega_{des}$, obtained when the clutch position $C_{closed}$ is reached. At this clutch position, $C_{closed}$ the rotational speed of the input shaft 109 $\omega_{gear\_in}$ and the engine speed $\omega_e$ are substantially equal, at which point the clutch is closed. In other words, when the clutch is closed, the desired speed difference $\Delta\omega_{des}$ is obtained, and therefore also the time derivative $\dot{T}q_{fw\_des}$. This is very advantageous, for example in connection with ramping-up after a shift operation, when moving off from a standstill and/or at other events/driving modes, when the dynamic torque needs to be increased. The

desired time derivative $\dot{T}q_{fw\_des}$ may thus be obtained directly, which results in faster shift operations, and which also results in a more powerful impression of the vehicle.

According to the present invention, the profile of the requested torque $Tq_{demand}$ is formed in such a manner that the dynamic torque $Tq_{fw}$ has an, at least in part, substantially even and non-oscillating profile, or does at least provide oscillations with significantly lower amplitudes than prior art at increased torque. Powertrain oscillations may thus be reduced in number and/or size for a number of driving modes, where previous controls of the requested torque $Tq_{demand}$ would have resulted in problematic rocking of the vehicle, for example comprising driving modes such as the start of a request for a torque from the engine, a so-called "TIPIN".

Prior art has controlled the static torque, which has caused powertrain oscillations in the vehicle. By using the present invention, the time derivative $\dot{T}q_{fw}$ for the dynamic torque may be controlled instead, which means that powertrain oscillations may be reduced considerably. The reduction in powertrain oscillations increases the driver comfort in the vehicle. In other words, a physical torque, which is the result of fuel being injected into the engine and the response by the powertrain due to its characteristics, is here controlled, this being the derivative of the dynamic torque $Tq_{fw}$, thus improving the driver's comfort.

Through the present invention a more efficient and reliable winding up of potential play in the powertrain is also achieved.

Play in the powertrain may, for example, arise when two cogs in the powertrain, such as for example the cogs in two cogwheels in the gearbox, fail to engage with each other for a brief period, and subsequently engage with each other again.

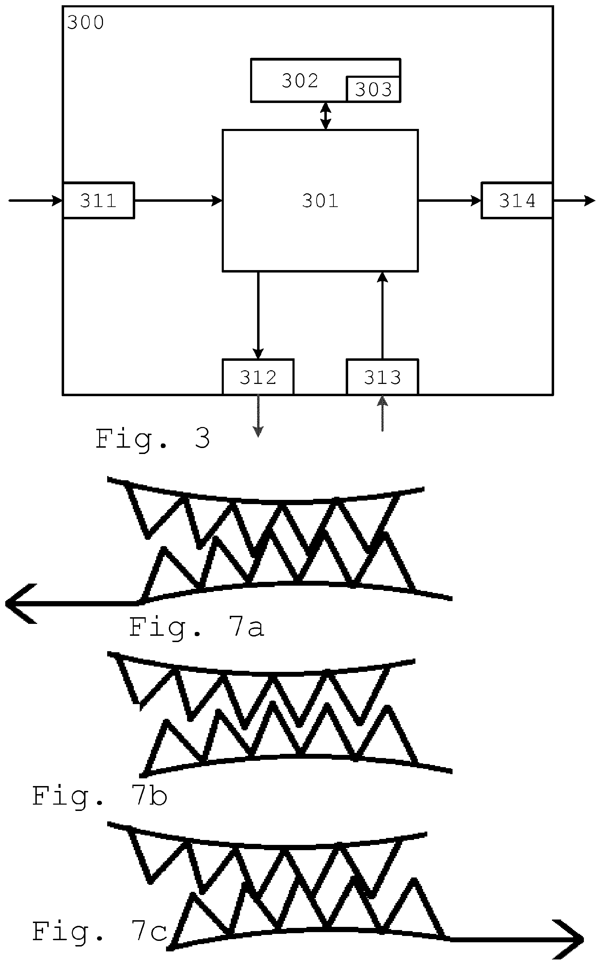

The position of the cogwheels in relation to each other during and outside of the play is schematically illustrated in the Figures 7a-c. The cogs in the cogwheels make contact in a first shaft position, during rotation in a first direction, as illustrated in Figure 7a, in a position corresponding to a maximum backward turn. The cogs in the cogwheels make contact in a third shaft position, during rotation in a second direction, as illustrated in Figure 7c, in a position corresponding to a maximum forward turn. Therefore, the cogs are engaged in both these positions (Figures 7a and 7c respectively), which also means that the play is rotated backwards and forwards respectively. The play in the powertrain is made up of the angle when the cogs are not engaged with each other, that is to say the angle range between the first and third shaft positions, corresponding to a second position/windingwinding up within the play, illustrated in Figure 7b. Thus, no torque is transmitted during the play, since the cogs do not engage with each other in this second gear/position. It should be noted that Figures 7a-c illustrate, in a schematic and simplified manner, a play between only two cogwheels, and that a powertrain may comprise clutches between more than two cogwheels. However, Figures 7a-c may be used to explain, in principle, the occurrence of a play.

A play may thus, for example, occur at a transition between dragging the engine and an acceleration/torque request when engaging the clutch, or during a shift operation. Since an efficient winding up of such a play may be obtained with the use of the present invention, a rapid torque build-up may be obtained.

The dynamic torque $Tq_{fw}$, for which the derivative $\dot{T}q_{fw}$ is controlled through the use of the present invention, therefore corresponds to the torque that is provided by the gearbox 103, which also may be expressed as the torque that is provided by a flywheel in the powertrain, whereat the influence from the powertrain, such as the engine's acceleration and its impact, is comprised within the dynamic torque $Tq_{fw}$. Thus, a physical control of the derivative $\dot{T}q_{fw}$ is achieved for the dynamic torque $Tq_{fw}$ when the present invention is used.

The derivative $\dot{T}q_{fw}$ for the dynamic torque $Tq_{fw}$ may, for example, be controlled in order to achieve specific torque ramps, such as ramping down or up in connection with shift operations in the gearbox 103. The derivative $\dot{T}q_{fw}$ for the dynamic torque $Tq_{fw}$ may also be controlled in order to achieve desired specific torque values, which is useful e.g. for cruise control, that is to say the use of a cruise control device for the control of the speed of the vehicle, or for pedal driving, that is to say manual control of the vehicle speed. This may be expressed as desired values $Tq_{fw\_req}$ and/or desired derivatives $\dot{T}q_{fw-req}$ for the dynamic torque being possible to achieve through the control according to the present invention.

The dynamic torque $Tq_{fw}$, provided by the engine 101 to its output shaft 102, may in one embodiment be determined based on a delayed requested engine torque $Tq_{demand\_delay}$, the rotational inertia of the engine $J_e$ and the rotational acceleration $\dot{\omega}_e$ of the engine 101.

The delayed requested engine torque $Tq_{demand\_delay}$ has been delayed with a period of time $t_{inj}$ elapsing in order to execute an injection of fuel into the engine 101, i.e. the period of time it takes from the start of the injection until the fuel is ignited and combusted. This injection period is $t_{inj}$ typically known, but its length varies, for example for different engines and/or for different speeds in an engine. The dynamic torque $Tq_{fw}$ may here be determined as a difference between estimated values for a delayed requested engine torque $Tq_{demand\_delay}$ and the torque values $J_e\dot{\omega}_e$, comprising measured values for rotational acceleration $\dot{\omega}_e$ of the engine. In one embodiment, the dynamic torque $Tq_{fw}$ may therefore be represented by a signal difference between a signal for an estimated delayed requested engine torque $Tq_{demand\_delay}$ and the torque signal $J_e\dot{\omega}_e$ comprising measured values for rotational acceleration $\dot{\omega}_e$ of the engine.

The delayed requested engine torque $Tq_{demand\_delay}$ may in one embodiment be defined as a net torque, meaning that losses and/or frictions are compensated, whereby a requested net engine torque and a delayed requested engine torque are achieved.

The dynamic torque $Tq_{fw}$, as provided by the engine 101 to its output shaft 102, thus corresponds, according to one embodiment, to the delayed requested engine torque $Tq_{demand\_delay}$ less a torque corresponding to the engine's rotational inertia $J_e$, multiplied with a rotational acceleration $\dot{\omega}_e$ for the engine 101, i.e. $Tq_{fw} = Tq_{demand\_delay} - J_e\dot{\omega}_e$, wherein the delayed requested engine torque $Tq_{demand\_delay}$ has been delayed by the injection time $t_{inj}$.

The rotational acceleration $\dot{\omega}_e$ for the engine 101 may here be measured by generating a time derivative of the engine speed $\omega_e$. The rotational acceleration $\dot{\omega}_e$ is then rescaled to a torque in accordance with Newton's second law, by being multiplied with the rotational inertia torque $J_e$ for the engine 101; $J_e\dot{\omega}_e$.

According to another embodiment, the dynamic torque $Tq_{fw}$ provided by the engine 101 may also be determined by the use of a torque sensor being placed at a suitable position along the vehicle's powertrain. Thus, a torque value measured by such a sensor may also be used in the feedback according to the present invention. Such a measured torque, which has been obtained by means of a torque sensor after the flywheel, i.e. somewhere between the flywheel and the driving wheels, corresponds to the physical torque that the dynamic engine torque $Tq_{fw}$ contributes. If a good a torque reporting may be achieved by means of the use of such a torque sensor, the torque sensor should thus provide a torque signal corresponding to the dynamic torque $Tq_{fw}$.

As is illustrated in Figure 1, the different parts of the powertrain have different rotational inertias, comprising a rotational inertia $J_e$ for the engine 101, a rotational inertia $J_g$ for the gearbox 103, a rotational inertia $J_c$ for the clutch 106, a rotational inertia $J_p$ for the propeller shaft and rotational inertias $J_d$ for each drive shaft 104, 105. Generally speaking, all rotating bodies have a rotational inertia $J$, which depends on the mass of the body and the distance of the mass from the rotational centre. For reasons of clarity, in Figure 1, only the above mentioned rotational inertias have been added, and their significance for the present invention will be described hereafter. A person skilled in the art does, however, realise that more moments of inertia may occur in a powertrain than those listed here.

According to one embodiment of the present invention, the assumption is made that the rotational inertia $J_e$ of the engine 101 is much greater than other rotational inertias in the powertrain, and that the rotational inertia $J_e$ of the engine 101 therefore dominates a total rotational inertia $J$ of the powertrain. That is to say $J = J_e + J_g + J_c + J_p + 2J_d$ but as $J_e \gg J_g$, $J_e \gg J_c$, $J_e \gg J_p$, $J_e \gg J_d$ the total rotational inertia $J$ of the powertrain is more or less equal to the rotational inertia $J_e$ of the engine 101; $J \approx J_e$ A non-limiting example for the values for these rotational inertias may be mentioned: $J_e = 4kgm^2$, $J_g = 0.2kgm^2$, $J_c = 0.1kgm^2$, $J_p = 7 * 10^{-4}kgm^2$, $J_d = 5 * 10^{-5}kgm^2$, which means that the assumption that the rotational inertia $J_e$ of the engine 101 dominates the total rotational inertia $J$ of the powertrain; $J \approx J_e$; is correct, as the other parts of the powertrain are much easier to rotate compared with the engine 101. The aforementioned example values are values on the engine side of the gearbox, which means that they will vary along the drive shaft depending on the gear ratio used. Regardless which gear ratio is being used, the rotational inertia $J_e$ of the engine 101 is much greater than other rotational inertias, and therefore dominates the total rotational inertia $J$ of the powertrain.

As the rotational inertia $J_e$ of the engine dominates the total rotational inertia $J$ of the powertrain; $J \approx J_e$; the dynamic wheel torque $Tq_{wheel}$ corresponds to the dynamic torque $Tq_{fw}$ provided by the engine, multiplied with the gear ratio $i$, $Tq_{wheel} = Tq_{fw} * i$ for the powertrain. This considerably simplifies the control of the requested torque $Tq_{demand}$ according to the present invention, as it is therefore very easy to determine the dynamic torque $Tq_{wheel}$ at the wheels. Hereby, the control of the requested torque $Tq_{demand}$ according to the present invention may continuously be adjusted to the dynamic torque $Tq_{wheel}$ provided to the wheels, which means that powertrain oscillations may be reduced significantly, or even be avoided completely. The engine torque $Tq_{demand}$ may then be requested in such a way that a desired dynamic torque $Tq_{wheel}$ is continuously provided at the wheels, which means that an even torque profile is achieved for the dynamic torque $Tq_{wheel}$ of the wheels, and that no oscillations occur for the wheels' torque profile, or that they have considerably lower amplitude than in prior art controlling of the requested engine torque $Tq_{demand}$.

The powertrain may be approximated as a relatively weak spring which may be described as:

$$Tq_{fw} =$$

$$Tq_{demand\_delay} - J_e\dot{\omega}_e = k(\theta_e - \theta_{wheel}) + c(\omega_e - \omega_{wheel}), \quad \text{(equation 1)}$$

where:

- $\theta_e$ is an angle for the engine's output shaft 102, i.e. a total increase of the engine's performance since a starting point. For example, the angle $\theta_e$ is 1000 revs, which corresponds to $1000*2\pi$ radians, if the engine has been running for a minute at the speed 1000 rpm;

- $\omega_e$ is the time derivative of $\theta_e$, i.e. a rotational speed of the shaft 102;

- $\theta_{wheel}$ is an angle for one or more of the driving wheels 110, 111, i.e. a total performance increase of the wheels since a starting point;

- $\omega_{wheel}$ is the time derivative of $\theta_{wheel}$, i.e. a rotational speed of the wheels;

- $k$ is a spring constant, which is related to a torque required for winding up the spring in order to achieve a certain gradient, for example in order to obtain a certain difference $\Delta\theta$ between $\theta_e$ and $\theta_{wheel}$. A low value for the spring constant $k$ corresponds to a weak and swaying spring/powertrain;

- $c$ is a dampening constant for the spring.

In this document, the wheel speed/rotational speed of the wheels 110, 111 $\omega_{wheel}$ relates to a rotational speed, which has been converted with respect to a gear ratio $i$ between the engine 101 and the driving wheels 110, 111. Alternatively, the engine speed $\omega_e$ may relate to a speed, which has been converted with respect to the gear ratio $i$ between the engine 101 and the driving wheels 110, 111. In other words, regard is had to the gear ratio $i$ between the engine 101 and the driving wheels 110, 111 when speed differences, as described in this document, between the engine speed $\omega_e$ and the rotational speed of the at least one driving wheel $\omega_{wheel}$ are determined and used, for example in calculations. Accordingly, the values for the current speed difference $\Delta\omega_{pres}$ and the desired speed difference $\Delta\omega_{des}$ have regard to the gear ratio $i$. Thus, in this document the wheels' rotational speed provided $\omega_{wheel}$ corresponds to/has the same scaling/dimension as the engine speed $\omega_e$, which means that these may be directly compared, for example in calculations according to any of the equations 1-3.

A derivation in time of equation 1 gives:

$$\dot{Tq}_{fw} = k(\omega_e - \omega_{wheel}) + c(\dot{\omega}_e - \dot{\omega}_{wheel}) \qquad\qquad \text{(equation 2)}$$

It is reasonable to assume that the powertrain often may be considered as an undampened spring, i.e. that $c = 0$, and that the spring constant $k$ is dominated by the spring constant $k_{drive}$ for the drive shafts 104, 105, i.e. $k = \dfrac{k_{drive}}{i^2}$ where $i$ is the gear ratio. If $c = 0$ then equation 2 is simplified as:

$$\dot{Tq}_{fw} = k(\omega_e - \omega_{wheel}) \qquad\qquad \text{(equation 3)}$$

As stated in equation 3, the time derivative $\dot{Tq}_{fw}$, that is the gradient, for the dynamic torque $Tq_{fw}$ may be considered to be proportionate to the difference $\Delta\omega$ between the rotational speed of the wheels 110, 111 $\omega_{wheel}$ and the rotational speed of the engine/shaft 102 $\omega_e$.

This means that a current derivative for a torque ramp $\dot{Tq}_{fw\_pres}$ is proportionate to a current difference $\Delta\omega_{pres}$ in rotational speed of the wheels 110, 111 $\omega_{wheel}$ and the engine/shaft 102 $\omega_e$; $\Delta\omega_{pres} = \omega_e - \omega_{wheel}$

This also means that a desired derivative for a torque ramp $\dot{Tq}_{fw\_des}$, that is a torque with a gradient, and which therefore changes in value over time, may be achieved by introducing a desired difference $\Delta\omega_{des}$ in rotational speed of the wheels 110, 111 $\omega_{wheel}$ and the engine/shaft 102 $\omega_e$; $\Delta\omega_{des} = \omega_e - \omega_{wheel}$:

$$\omega_{ref} = \omega_{wheel} + \frac{\dot{Tq}_{fw\_req}}{k}; \qquad\qquad \text{(equation 4)}$$

where $\omega_{ref}$ is the reference rotational speed to be requested from engine 101 in order to achieve the torque ramp. Thus, the torque control unit 122 is arranged to indirectly control the engine speed $\omega_e$ by controlling the torque requested from the engine 101 $Tq_{demand}$.

For equations 1-4 above, the differences $\Delta\omega$, $\Delta\omega_{des}$, $\Delta\omega_{pres}$ in the rotational speed have been described as a difference between the rotational speeds for the wheels 110, 111 $\omega_{wheel}$ and the rotational speed of the engine/shaft $\omega_e$. However, it must be realised that the difference $\Delta\omega$ in more general terms may be described as a difference in rotational speed between a first end of the powertrain, rotating with a first rotational speed $\omega_1$ and a second end of the powertrain, rotating at a second rotational speed $\omega_2$; $\Delta\omega = \omega_1 - \omega_2$, wherein the first end, for example, may be a part of the engine 101 or the output shaft 102 from the engine, and the second end, for example, may be the driving wheels 110, 111 or the drive shafts 104, 105. Here as well, regard is had to the gear ratio $i$ between the first end and the second end of the powertrain. As stated above, a time derivative/gradient for the dynamic torque is proportionate to a current rotational speed difference $\Delta\omega_{pres}$ between the first rotational speed $\omega_1$ and the second rotational speed $\omega_2$.

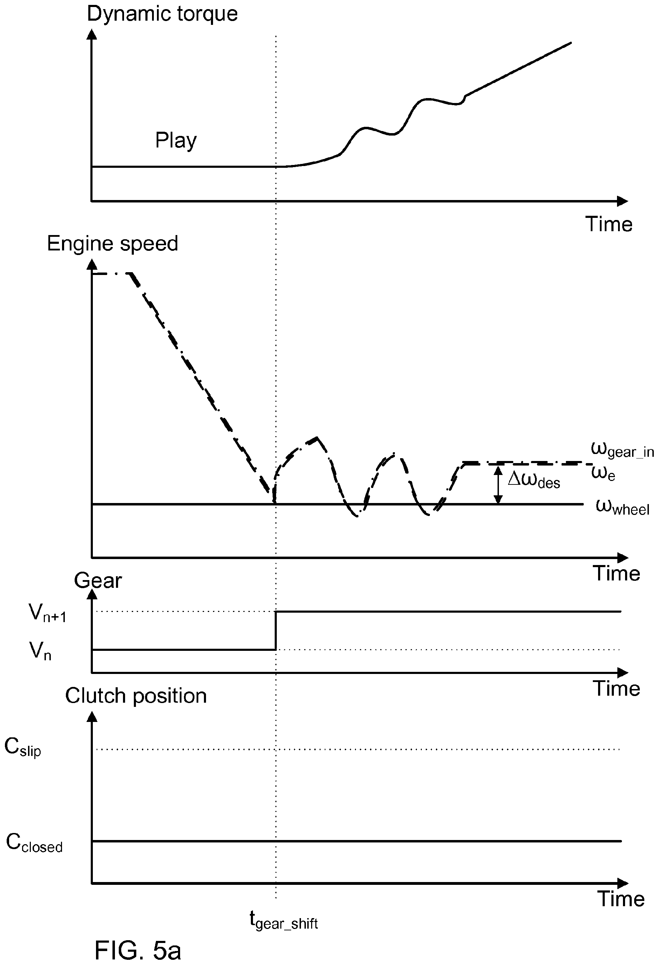

The present invention, and the manner in which it differs from prior art technology will be described below with the help of the schematic Figures 5a-b, which illustrate, in a simplified manner, an example of a driving mode and how such driving mode would have been handled with the use of prior art technology, and with the use of the present invention, respectively. Figures 5a-b show schematic examples of curves, having an appearance that clearly illustrates the principles of the present invention, and those of prior art technology, respectively. Thus, the curves should not be interpreted as exact and/or measured values.

Figure 5a shows a prior art method at an example of a driving mode, comprising a shift operation from a gear $V_n$ to a higher gear $V_{n+1}$ in the gearbox 103 in the vehicle. This shift operation takes place at the time of the shift operation $t_{gear\_shift}$.

According to prior art solutions, the clutch is closed both before and after the point in time of the shift operation $t_{gear\_shift}$. This may be seen in Figure 5a, since the rotational speed of the input shaft 109 $\omega_{gear\_in}$ (dotted line) and the engine speed $\omega_e$ (dashed line) are substantially equal the whole time, that is to say they follow each other, since substantially the clutch does not slip.

When prior art solutions are used, the shift operation itself must wait until the rotational speed of the input shaft 109 $\omega_{gear\_in}$, and therefore also the engine speed $\omega_e$, is synchronised with the wheels' rotational speed $\omega_{wheel}$. In other words, the point in time of the shift operation $t_{gear\_shift}$ occurs when the engine speed $\omega_e$ is substantially equal to the wheels' rotational speed $\omega_{wheel}$.

In order to obtain a torque ramp after the shift operation, as described above, a speed difference $\Delta\omega$ between the engine speed $\omega_e$ and the rotational speed of the driving wheels $\omega_{wheel}$ must be built up, since such speed difference $\Delta\omega$ is proportionate to the derivative $\dot{T}q_{fw}$ for the dynamic torque. In order to achieve a desired torque ramp after the shift operation, the engine speed $\omega_e$ must therefore be increased from its value equal to the wheel speed $\omega_{wheel}$ at the time of the shift operation $t_{gear-shift}$ to a value which is greater than the wheel speed $\omega_{wheel}$, in order for a desired speed difference $\Delta\omega_{des}$, and thus also the desired torque ramp, to be achieved.

As illustrated in the curve at the top of Figure 5a, through prior art technology, initially a slowly rising torque ramp is obtained after the shift operation. The torque ramp is at first not rising at all, and then slowly begins to increase. When the torque increases, oscillations will arise in the torque, that is to say varying values for the time derivative of the torque. In order to reduce these oscillations, that is to say in order to reduce the amplitude of the oscillations, according to prior art technology the gradient of the torque ramp, that is to say the time derivative of the torque, is limited. An average derivative for the torque ramp after the shift operation therefore becomes relatively small in size, that is to say that the torque ramp obtains a relatively flat extension over time. The flat and slowly rising torque ramp may result in the vehicle and/or the shift operation being perceived as powerless and slow, respectively.

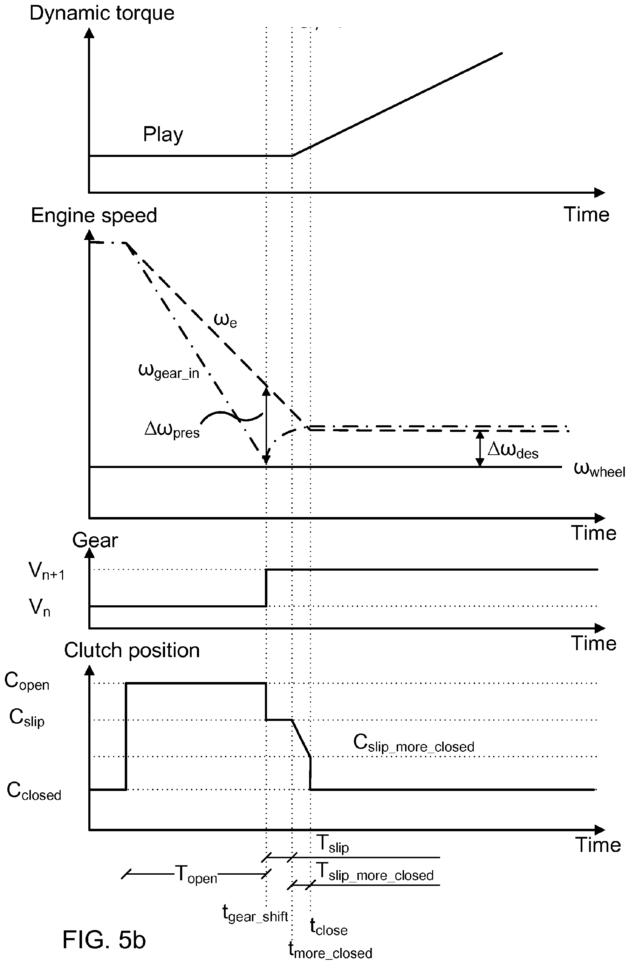

Figure 5b shows a non-limiting driving mode, corresponding to the one at Figure 5a, where an embodiment of the present invention is used.

Thus, the driving mode in Figure 5b comprises a shift operation from a gear $V_n$ to a higher gear $V_{n+1}$ in the gearbox 103 in the vehicle. This shift operation takes place at the point in time of the shift operation $t_{gear\_shift}$.

According to the present invention, the clutch is in an open position $C_{open}$ just before the time of the shift operation $t_{gear\_shift}$. This may be seen in Figure 5b, since the speed of the input shaft 109 $\omega_{gear\_in}$ (dotted line) and the engine speed $\omega_e$ (dashed line) separate from each other before the point in time of the shift operation $t_{gear\_shift}$, that is to say that these speeds do not follow each other, as the clutch is open.

When the present invention is used, the shift operation must wait until the rotational speed of the input shaft 109 $\omega_{gear\_in}$ is synchronised with the wheels' rotational speed $\omega_{wheel}$, comprising gear ratios between the driving wheels and the input shaft 109, as mentioned above. In other words, the point in time of the shift operation $t_{gear\_shift}$ occurs when the rotational speed of the input shaft 109 $\omega_{gear-in}$ is substantially equal to the wheel speed $\omega_{wheel}$, converted with the gear ratios between the wheels and the input shaft.

An important difference between the present invention and prior art solutions, however, is that the rotational speed of the input shaft 109 $\omega_{gear\_in}$ and the engine speed $\omega_e$ differ from each other before the point in time of the gear operation $t_{gear-shift}$ when the present invention is used. This means that only the rotational speed of the input shaft 109 $\omega_{gear-in}$ needs to be synchronised with the wheels' rotational speed $\omega_{wheel}$. In other words, the engine speed $\omega_e$ does not need to be synchronised with the wheels' rotational speed $\omega_{wheel}$. This realisation is used, according to the present invention, to control the clutch position in the clutch 106, in order to directly achieve a desired ramp gradient after the shift operation.

This may be seen in Figure 5b, which schematically illustrates that the current speed difference $\Delta\omega_{pres}$ differs from the desired speed difference $\Delta\omega_{des}$ when the driving gear $V_{n+1}$ is activated at the time of the shift operation $t_{gear\_shift}$. In the example in Figure 5b, the current speed difference $\Delta\omega_{pres}$ is greater than the desired speed difference $\Delta\omega_{des}$ at the time of the shift operation $t_{gear\_shift}$. The torque control unit 122 is, according to one embodiment of the present invention, arranged to control the engine speed $\omega_e$ in such a manner that the current speed difference $\Delta\omega_{pres}$ approaches,

that is to say drops toward the desired speed difference $\Delta\omega_{des}$ in Figure 5b.

According to one embodiment, the clutch control unit 123 is also arranged to control, at the time of the shift operation $t_{gear\_shift}$, the clutch 106 towards a clutch position $C_{slip}$, at which the clutch 106 slips and thus transmits less torque than it otherwise could transmit, if it were in its closed position $C_{losed}$. The clutch stays in this slipping clutch position $C_{slip}$ for a slip time period $T_{slip}$, during which the driving gear is activated. The activation of the driving gear at the time of the shift operation $t_{gear\_shift}$ here comprises an engagement of the gear, and an acknowledgement that the gear has been engaged.

The clutch control unit 123 is arranged to, subsequently, after the slip time period $T_{slip}$ has ended, control the clutch towards the clutch position $C_{closed}$, at which the rotational speed of the input shaft 109 $\omega_{gear\_in}$ and the engine speed $\omega_e$ are substantially equal. As described above, the clutch control unit 123 is thus arranged to control the clutch towards this clutch position $C_{closed}$, in such a manner that the clutch position $C_{closed}$ is reached substantially at the point in time $t_{close}$ when the current speed difference $\Delta\omega_{pres}$ reaches the desired speed difference $\Delta\omega_{des}$, so that a desired torque ramp, that is to say a desired derivative $\dot{T}q_{fw}$ for the torque is obtained immediately/directly. As mentioned above, in the general case, in order to achieve a torque ramp after the shift operation, a speed difference $\Delta\omega$ between the engine speed $\omega_e$ and the rotational speed of the driving wheels $\omega_{wheel}$ is required, since this speed difference $\Delta\omega$ is proportionate in relation to the derivative $\dot{T}q_{fw}$ for the dynamic torque. In order to obtain a desired derivative $\dot{T}q_{fw}$ for the torque, the clutch must thus, according to the present invention, reach the clutch position $C_{closed}$ just at the point in time $t_{close}$ when the desired speed difference $\Delta\omega_{des}$ is achieved, that is to say when the engine speed $\omega_e$ here has dropped to the extent that the current speed change $\Delta\omega_{pres}$ is equal to the desired speed change $\Delta\omega_{des}$.

The clutch position $C_{closed}$ may also be defined as the clutch being closed and no longer slipping. This may also be expressed as the clutch at this clutch position $C_{closed}$ being able to transmit more torque than what must be transmitted to the gearbox's' input shaft 109 and/or to the driving wheels.

When the clutch 106 is in the slipping clutch position $C_{slip}$ the clutch transmits a slip torque $Tq_{slip}$, which has a permitted and suitable value to wind up the powertrain's play and/or to prepare the powertrain for the future torque increase/ramp. This may also be expressed as the powertrain, during the slip time period $T_{slip}$, being pre-loaded with a slip torque $Tq_{slip}$, which has an insignificant impact on the progress of the vehicle 101. Accordingly, a play in the powertrain is wound up during the slip time period $T_{slip}$ when the clutch 106 is in the slipping clutch position $C_{slip}$.

As displayed schematically in Figure 5b, the clutch 106 may have an additional clutch position **$C_{slip\_more\_closed}$**, which is more closed, and thus transmits more torque, than does the slipping clutch position $C_{slip}$. If the play in the powertrain has been wound up during the slip time period $T_{slip}$ when the clutch 106 was in the slipping clutch position $C_{slip}$, and if the current speed difference $\Delta\omega_{pres}$ has not reached the desired speed difference $\Delta\omega_{des}$, then, according to one embodiment of the present invention, the clutch control unit 123 may control the clutch 106 to be ramped towards this more closed clutch position $C_{slip\_more\_closed}$ during a more closed time period $T_{slip\_more\_closed}$, and with start at a point in time $t_{more\_closed}$ for a more closed clutch.

When the clutch 106 goes/is ramped from the slipping clutch position $C_{slip}$ to the more closed clutch position $C_{slip\_more\_closed}$, a torque ramp is built up. This torque ramp may be built up so that it is adapted to/matches the desired torque ramp gradient/derivative $\dot{T}q_{fw}$ corresponding to the desired speed difference $\Delta\omega_{des}$. Thus, a desired torque ramping may here be initiated already before the clutch has been completely closed $C_{closed}$ at the time for closure $t_{close}$, which is clearly illustrated by the top curve in Figure 5b.

As illustrated in the curve at the top of Figure 5b, with the use of the present invention the desired torque ramp/derivative is obtained early. As displayed in Figure 5b, the desired gradient may be obtained at a certain time (referred to as $T_{slip}$ in the figure) after the input shaft has dropped down to the wheels' rotational speed $\omega_{gear\_in} = \omega_{wheel}$, which occurs before the engine speed would have dropped down to the wheels' rotational speed $\omega_e = \omega_{wheel}$. This is because the input shaft's rotational speed $\omega_{gear\_in}$ has a steeper gradient down towards the wheels' rotational speed $\omega_{wheel}$ than has the engine speed $\omega_e$. This may also be described as the desired ramp gradient being obtainable at a time (referred to as $T_{slip-more-closed}$ in the figure) before the clutch is closed and $\omega_e = \omega_{gear\_in}$. This ramp gradient, obtained early, means that the vehicle and/or the shift operation may be perceived as powerful and fast, respectively.

The clutch 106 thus has a number of different clutch positions, which correspond to different levels for the torque transmitted via the clutch.

When the clutch is in its open clutch position $C_{open}$ substantially no torque is transmitted by the clutch 106, that is to say the powertrain is then open.

When the clutch is in its slipping clutch position $C_{slip}$ a slip torque $Tq_{clutch\_slip}$ is transmitted, which has a size suitable to wind up the powertrain's play and/or to prepare the powertrain for a future torque ramp. According to a non-limiting example, this slip torque $Tq_{clutch\_slip}$ may have a value of approximately 50 Nm.

When the clutch is in its closed clutch position $C_{closed}$ the rotational speeds for the gearbox's input shaft 109 $\omega_{gear\_in}$ and for the engine $\omega_e$ are substantially equal, which also means that the rotational speeds for the clutch's input 102 and output 109 shafts are substantially equal. Accordingly, the clutch does not, substantially, slip in its closed position $C_{closed}$, which also usually means that the clutch 106 may then transmit more torque than will be issued when the vehicle is driven.

The more closed clutch position $C_{slip\_more\_closed}$ is between the slipping clutch position $C_{slip}$ and the closed clutch position $C_{closed}$. The torque $Tq_{clutch\_slip\_more\_closed}$ transmitted by the clutch 106 at this more closed clutch position $C_{slip\_more\_closed}$ is greater than the torque $Tq_{clutch\_slip}$ transmitted by the clutch 106 at the slipping clutch position $C_{slip}$, and smaller than the torque $Tq_{clutch-closed}$ transmitted by the clutch 106 at the closed clutch position $C_{closed}$. According to a non-limiting example, this torque $Tq_{clutch\_slip\_more\_closed}$ may have a value within the interval from approximately 50 Nm to the torque that is just then requested by the driver. If, for example, the driver requests a torque of 1500 Nm, the interval will thus be 50-1500 Nm. The clutch may here be ramped from a corresponding current speed difference to the desired speed difference, that is to say until $\Delta\omega_{pres} = \Delta\omega_{des}$.

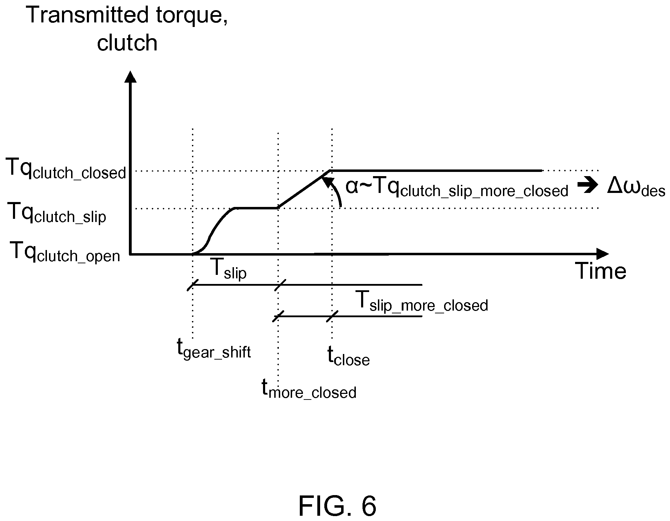

Figure 6 schematically shows an example of the torque transmitted over time by the clutch 106 when the present invention is used. The torque curve in Figure 6 should be seen as a fundamental diagram, showing how the clutch's transmitted torque may appear. The curve should not be seen as an exact and/or measured curve.

Before the time of the shift operation $t_{gear\_shift}$, when the driving gear $V_{n+1}$ is activated, the clutch is open according to the present invention. Thus, the clutch is in its open position $C_{open}$, in which no torque $Tq_{clutch\_open}$ is transmitted by the clutch 106. After the time of the shift operation $t_{gear-shift}$ the clutch transitions to its slipping clutch position $C_{slip}$, in which a slip torque $Tq_{clutch\_slip}$ is transmitted by the clutch 106. The clutch stays in his slipping clutch position $C_{slip}$ during the slip time period $T_{slip}$, and the driving gear is activated.

During this slip time period $T_{slip}$ a potential play may be wound up in the powertrain.

If the play in the powertrain has been wound up during the slip time period $T_{slip}$, and if the current speed difference $\Delta\omega_{pres}$ has not reached the desired speed difference $\Delta\omega_{des}$, then, as described above, the clutch control unit 123 may control the clutch 106 towards the more closed clutch position $C_{slip\_more\_closed}$ during a more closed time period $T_{slip\_more\_closed}$, starting at the point in time $t_{more\_closed}$ for a more closed clutch. When the clutch 106 moves from the slipping clutch position $C_{slip}$ to the more closed clutch position $C_{slip\_more\_closed}$, the clutch 106 transmits the torque $Tq_{clutch\_slip\_more-closed}$, and a torque ramp may be built up, which is related to the angle $\alpha$ for the curve of the clutch's transmitted torque $Tq_{clutch\_slip\_more\_closed}$ during the more closed time period $T_{slip\_more\_closed}$. The angle $\alpha$ for the curve may here be adapted to and/or match the desired torque ramp/derivative $\dot{Tq}_{fw}$ and/or the desired speed difference $\Delta\omega_{des}$.

The clutch control unit 123 is arranged to subsequently, that is to say after the more closed time period $T_{slip\_more\_closed}$ and when the desired speed difference $\Delta\omega_{des}$ has been reached, control the clutch 106 toward the clutch position $C_{closed}$, at which the rotational speed of the input shaft 109 $\omega_{gear\_in}$ and the engine speed $\omega_e$ are substantially equal, and in such a manner that the clutch transmits the torque $Tq_{clutch\_closed}$, which exceeds the dynamic torque to be issued by the driving wheels.

According to one embodiment of the present invention, the clutch control unit 123 is arranged to initiate the control of the clutch 106 towards the closed clutch position $C_{closed}$, at a time $t_{close}$ which is determined by having regard to at least one actuation time period $T_{act}$ for the clutch 106.

Activations of the clutch are usually carried out with the use of one or several actuators. These actuators may for example be hydraulic, pneumatic and/or electrically driven/activated/controlled. Hydraulic actuators require a hydraulic activation time to achieve the desired movements. Pneumatic actuators, that is to say actuators operated by compressed air, require a period of inflation to achieve the desired movement. Electrical actuators require a calculation and/or embodiment time to achieve the desired movement of the actuator. Accordingly, a control time/actuation time period $T_{act}$ is required for the respective actuators before they begin to move, whereat such control time/actuation time period $T_{act}$ comprises one or several of the above mentioned hydraulic activation time, inflation time and calculations and/or embodiment time. Through this embodiment of the present invention, a very accurate control of the clutch may therefore be obtained, since regard is had to this control time/actuation time period $T_{act}$ for the clutch 106.

The engine speed $\omega_e$ may, according to one embodiment of the present invention, be controlled based on among others the current speed difference $\Delta\omega_{pres}$, the desired speed difference $\Delta\omega_{des}$ and on the spring constant $k$. The spring constant $k$ is relative to a torsional compliance in the powertrain. In many applications, the spring constant is dominated $k$ by the spring constant $k_{drive}$ for the drive shafts 104, 105, related to the gear ratio of the powertrain, i.e.

$$k \approx \frac{k_{drive}}{i^2},$$ where $i$ is the gear ratio.

In other applications, for which the spring constant $k$ is not dominated by the spring constant $k_{drive}$ for the drive shafts 104, 105, or for which the actual value of the spring constant $k$ is important and is not permitted to be approximated, a total spring constant $k_{tot}$ is determined for the powertrain, which comprises torsional compliances for substantially all components of the powertrain.

The spring constant $k$ may be determined based on knowledge of which components are included in the powertrain and the torsional compliances of the included components, and how the components of the powertrain are configured. As the configuration of the components and their relationship to the spring constant $k$ is known through measurements made during the construction and/or fitting of the powertrain, it is possible to determine the spring constant *k.*

The spring constant *k* may also be determined by means of adaptive estimation when the vehicle is being driven. This estimation may then take place, at least partially continuously, during suitable driving sections. The estimate is based on a difference $\Delta\omega$ between the rotational speed $\omega_{wheel}$ of the wheels 110, 111 and the rotational speed $\omega_e$ of the engine/shaft 102 during a torque ramp and on the gradient of the torque ramp, by determining the ratio between the derivative of the dynamic torque and the difference $\Delta\omega$; $k = \dfrac{\dot{Tq}_{fw}}{\Delta\omega}$. For example, the spring constant for the derivative 3000 Nm/s and the rotational difference 100 rpm is then $k = \dfrac{3000}{100} * \dfrac{\pi}{30} =$ 286 Nm/row. The estimates may advantageously be carried out more than once, and thus an average value for the results is determined.

The control according to the present invention may occur in the direction of a desired gradient/change/derivative $\dot{Tq}_{fw\_des}$ for the dynamic torque. The desired derivative $\dot{Tq}_{fw\_des}$ for the dynamic torque may be related to a driving mode used in the vehicle. Several such driving modes are defined for vehicles, for example an economic driving mode (ECO), a powerful driving mode (POWER) and a normal driving mode (NORMAL). The driving modes define, for example, how aggressively the vehicle will behave and what feeling the vehicle will convey when being driven, wherein this aggression is related to the derivative $\dot{Tq}_{fw\_des}$ for the dynamic torque.

The desired derivative $\dot{Tq}_{fw\_des}$ for the dynamic torque may be related to a calibration of at least one parameter, which is related to a risk for jerkiness of the powertrain. For example, a maximum value $\dot{Tq}_{fw\_des\_max}$ for the desired derivative may be calibrated to a value compensating for jerks in the powertrain when relatively large changes in the requested torque occur, for example when an accelerator pedal is depressed or released relatively quickly.

The desired derivative $\dot{Tq}_{fw\_des}$ for the dynamic torque may be related to, and provide, a ramping up after a shift operation in the gearbox. The desired derivative $\dot{Tq}_{fw\_des}$ for the dynamic torque may be related to, and provide, a ramping up after closure of the clutch 106.

A person skilled in the art will realise that a method for control of the time derivative $\Delta\dot{Tq}_{fw}$ for a dynamic torque according to the present invention may also be implemented in a computer program, which when executed in a computer will cause the computer to carry out the method. The computer program usually consists of a part of a computer program product 303, where the computer program product comprises a suitable digital storage medium on which the computer program is stored. Said computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

Figure 3 schematically shows a control device 300. The control device 300 comprises a calculation unit 301, which may consist of substantially a suitable type of processor or microcomputer, e.g. a circuit for digital signal processing (Digital Signal Processor, DSP), or a circuit with a predetermined specific function (Application Specific Integrated Circuit, ASIC). The calculation unit 301 is connected to a memory unit 302, installed in the control device 300, providing the calculation device 301 with e.g. the stored program code and/or the stored data, which the calculation device 301 needs in order to be able to carry out calculations. The calculation unit 301 is also arranged to store interim or final results of calculations in the memory unit 302.

Further, the control device 300 is equipped with devices 311, 312, 313, 314 for receiving and sending of input and output signals. These input and output signals may contain wave shapes, pulses, or other attributes, which may be detected as information by the devices 311, 313 for the receipt of input signals, and may be converted into signals that may be processed by the calculation unit 301. These signals are then provided to the calculation unit 301. The devices 312, 314 for sending output signals are arranged to convert the calculation result from the calculation device 301 into output signals for transfer to other parts of the vehicle's control system and/or the component(s) for which the signals are intended, for example to the engine.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation unit 301, and that the above-mentioned memory may consist of the memory unit 302.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than shown in Figures 1 and 3, as is well known to a person skilled in the art within the technology area.

The present invention, in the embodiment displayed, is implemented in the control device 300. The invention may, however, also be implemented wholly or partly in one or several other control devices, already existing in the vehicle, or in a control device dedicated to the present invention.

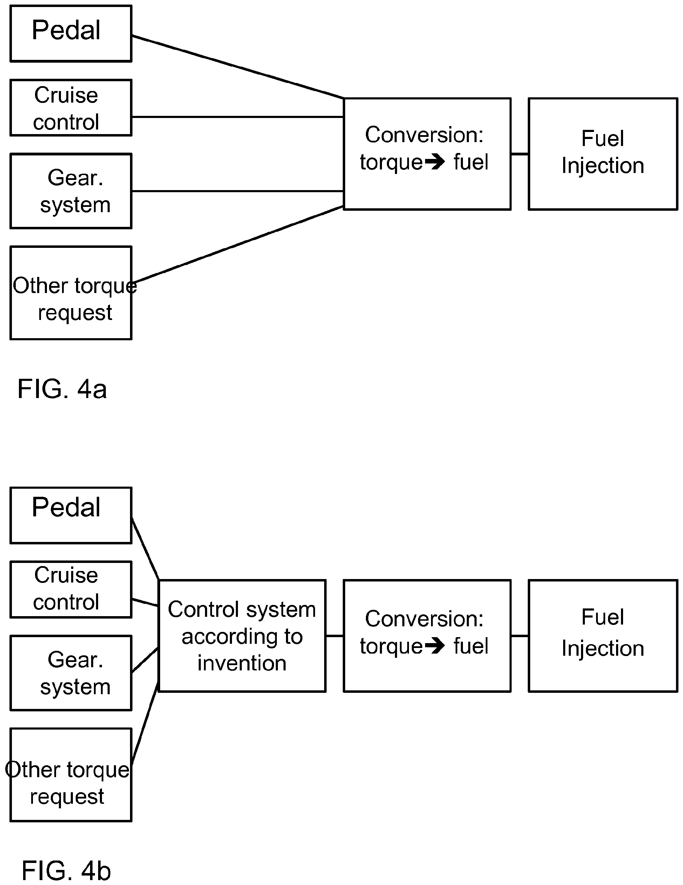

Figures 4a-b show a schematic block diagram for a prior art fuel injection system (Figure 4a) and a fuel injection system comprising a control system according to the present invention (Figure 4b).

In order to determine how much fuel to inject into the engine, information/indications of the torque requested have been used in vehicles for a long time, such as, for example, signals and/or mechanical indications from, for example, a driver-controlled accelerator pedal, a cruise control and/or a shifting system. The amount of fuel to be injected into the engine is then calculated based on the information/indications. In other words, a direct reinterpretation/conversion of the information/indication into a corresponding amount of fuel is carried out. This fuel is then injected into the cylinders of the engine in order to operate the engine. This prior art procedure is shown schematically in Figure 4a. Thus, using prior art, a direct transfer of the information/indication from, for example, the accelerator pedal to the static torque achieved by the fuel injection is received and used. In other words, for example the indication from the accelerator pedal $Tq_{from\_acc\_pedal}$, is here directly used to calculate the requested torque $Tq_{demand}$; $Tq_{demand} = Tq_{from\_acc\_pedal}$.

When the present invention is used in the fuel injection system, as illustrated in Figure 4b, a regulator/control system, i.e. the system according to the present invention, which is arranged for the control of a torque $Tq_{demand}$ requested from the engine in a vehicle, between the accelerator pedal, the cruise control and/or the shifting system, and the conversion of the torque to fuel. Thus, the regulator/control system, which achieves the requested/desired behaviour/profile for the dynamic torque, is comprised in this system according to the present invention. It is thus this dynamic torque which is calculated/converted to the amount of fuel to be injected into the engine during combustion. In other words, the indication from the accelerator pedal $Tq_{from\_acc\_pedal}$ is here first transformed into a speed request for the dynamic torque, for example by means of the use of an equation, with the indication from the accelerator pedal $Tq_{from\_acc\_pedal}$ introduced

$$Tq_{demand} = Tq_{fw\_pres} + t_{delay\_total} \frac{Tq_{from\_acc\_pedal} - Tq_{fw\_pres}}{\tau},$$

into the equation: whereat fuel corresponding to this speed request $Tq_{demand}$ will be injected into the engine. Here, $Tq_{fw\_pres}$ is the current value for the dynamic torque. The total delay time $t_{delay\_total}$ corresponds to the time it takes from the determining of at least one parameter value until a change in the dynamic torque $Tq_{fw}$, based on the determined at least one parameter value, has been performed. The calibration parameter $\tau$ is related to a settling in period for the adjustment/regulator and has the time dimension. The calibration parameter $\tau$ may be set to a smaller value if a quicker settling in is desirable, and to a greater value if a slower settling in is desirable.

Other adjustment equations could also have been used in the same manner, as the person skilled in the art will realise. This means that the current dynamic torque $Tq_{fw\_pres}$ according to the present invention is controlled towards the indication from the accelerator pedal $Tq_{from\_acc\_pedal}$. When the present invention is used, the accelerator pedal, the cruise control, the shift system or another possible speed requester may be used, in order to request and/or provide a dynamic torque, rather than the static torque requested in prior art systems (Figure 4a).

In this document, devices are often described as being arranged to carry out steps in the method according to the invention. This also comprises that the devices are adapted and/or set up to carry out these method steps.

The present invention is not limited to the embodiments of the invention described above, but relates to and comprises all embodiments within the protected scope of the enclosed independent claims.

## Claims

1. System arranged for control of a time derivative $\dot{Tq}_{fw}$ for a dynamic torque, which is provided to an output shaft (102) from an engine (101) in a vehicle (100) driven with a driving gear activated in a gearbox (103)comprising:

   - a first determining unit (121), arranged for the determination of a current speed difference $\Delta\omega_{pres}$ between a first end of a powertrain in said vehicle (100), which rotates with an engine speed $\omega_e$ , and a second end of said powertrain, which rotates with a rotational speed of at least one driving wheel $\omega_{wheel}$ converted with the gear ratio i between the engine and the driving wheel ;
   - a torque control unit (122), arranged to carry out a control of said engine speed $\omega_e$, wherein said control of said engine speed $\omega_e$ is carried out in such a manner that said current speed difference $\Delta\omega_{pres}$ is controlled towards a desired speed difference $\Delta\omega_{des}$ between said engine speed $\omega_e$ and said rotational speed of said at least one driving wheel $\omega_{wheel}$ converted with the gear ratio i between the engine and the driving wheel; and
   - a clutch control unit (123), arranged to carry out a control of a clutch (106), **characterised in that** the control unit is arranged to control the clutch (106) from an initial temporary open clutch position $C_{open}$, before a time for a shift operation $t_{gear-shift}$ which is arranged to occur when a rotational speed of an input shaft (109) $\omega_{gear\_in}$

is substantially equal to the wheel speed $\omega_{wheel}$ converted with gear ratios between the wheels and the input shaft (109), towards a clutch position $C_{closed}$, for which a rotational speed of an input shaft (109) in said gearbox (103) $\omega_{gear\_in}$ and said engine speed $\omega_e$ are substantially equal, wherein said clutch position $C_{closed}$ is reached substantially when said current speed difference $\Delta\omega_{pres}$ reaches said desired speed difference $\Delta\omega_{des}$, and wherein the desired speed difference $\Delta\omega_{des}$ is proportionate to a desired value for the time derivative $\dot{Tq}_{fw\_des}$ for said dynamic torque, arranged to be used for further control of the time derivative $\dot{Tq}_{fw}$ for the dynamic torque.

2. System according to claim 1, wherein said current speed difference $\Delta\omega_{pres}$ differs from said desired speed difference $\Delta\omega_{des}$ when said driving gear is activated, following which said torque control unit (122) is arranged to control said engine speed $\omega_e$ in such a manner that said current speed difference $\Delta\omega_{pres}$ approaches said desired speed difference $\Delta\omega_{des}$.

3. System according to any of claims 1-2, wherein said clutch control unit (123) is arranged to control said clutch towards a clutch position $C_{slip}$, at which said clutch (106) slips during a slip time period $T_{slip}$, and wherein said driving gear is activated during said slip time period $T_{slip}$.

4. System according to claim 3, wherein said clutch control unit (123) is arranged, after said slip time period $T_{slip}$, to control said clutch toward said clutch position $C_{closed}$, at which said rotational speed of said input shaft (109) $\omega_{gear\_in}$ and said engine speed $\omega_e$ are substantially equal.

5. System according to any of claims 3-4, wherein a play in said powertrain is wound up during said slip time period $T_{slip}$ when said clutch (106) is in said slipping clutch position $C_{slip}$.

6. System according to claim 5, wherein said powertrain during said slip time period $T_{slip}$ is pre-loaded with a slip torque $Tq_{slip}$, which has an insignificant impact on the progress of said vehicle (101).

7. System according to any of claims 3-6, wherein said clutch control unit (123) is arranged to control said clutch (106) towards a clutch position $\boldsymbol{C_{slip\_more\_closed}}$, which is more closed than said slipping clutch position $C_{slip}$, if said play is wound up and said current speed difference $\Delta\omega_{pres}$ has not reached said desired speed difference $\Delta\omega_{des}$.

8. System according to claim 7, wherein

- said more closed clutch position $C_{slip\_more\_closed}$ is located between said slipping clutch position $C_{slip}$ and said clutch position $C_{closed}$, for which said rotational speed of said input shaft (109) $\omega_{gear\_in}$ and said engine speed $\omega_e$ are substantially equal; and
- a torque $Tq_{slip\_more\_closed}$ transmitted by said clutch (106) at said more closed clutch position $C_{slip\_more\_closed}$ is larger than a torque $Tq_{slip}$ transmitted by said clutch (106) at said slipping clutch position $C_{slip}$, and smaller than a torque $Tq_{closed}$ transmitted by said clutch (106) at said clutch position $C_{closed}$, for which said rotational speed of said input shaft (109) $\omega_{gear\_in}$ and said engine speed $\omega_e$ are substantially equal.

9. System according to any of claims 1-8, wherein said clutch control unit (123) is arranged, at a point in time $t_{close}$, which is determined by having regard to at least one actuation time period $T_{act}$ for said clutch (106), to initiate said control of said clutch (106) towards said clutch position $C_{closed}$, at which said rotational speed of said input shaft (109) $\omega_{gear\_in}$ and said engine speed $\omega_e$ are substantially equal.

10. System according to any of claims 1-9, wherein said torque control unit (122) is arranged to carry out said control of said engine speed $\omega_e$, based on said current speed difference $\Delta\omega_{pres}$, on said desired speed difference $\Delta\omega_{des}$ and on a spring constant $k$ related to a torsional compliance for said powertrain.

11. System according to claim 10, wherein said spring constant $k$ is one of the group of:

- a spring constant $k_{drive}$ for driving shafts (104, 105) in said vehicle (100), related to a gear ratio $i$ for said powertrain, which dominates said spring constant $k$ for said powertrain; and
- a total spring constant $k_{tot}$ for said powertrain.

12. System according to any of claims 10-11, comprising a second determining unit, arranged for the determining of said spring constant $k$ by means of one or more of the group:

- a calculation based on a configuration of one or more components in said powertrain, wherein a relation to said spring constant $k$ is known for said one or more components; and
- an, at least in part, continuously adaptive estimation, which estimates said spring constant $k$ during the driving of said vehicle (100).

**13.** System according to any of claims 1-12, wherein said torque control unit (122) is arranged to indirectly control said engine speed $\omega_e$ by means of control of a torque $Tq_{demand}$ requested from said engine (101).

**14.** Method for control of a time derivative $\dot{Tq}_{fw}$ for a dynamic torque, which is provided to an output shaft (102) from an engine (101) in a vehicle (100) driven with a driving gear activated in a gearbox (103), comprising;

- determination (201) of a current speed difference $\Delta\omega_{pres}$ between a first end of a powertrain in said vehicle (100), which rotates with an engine speed $\omega_e$, and a second end of said powertrain, which rotates with a speed of at least one driving wheel $\omega_{wheel}$ converted with the gear ratio i between the engine and the driving wheel
- control (202) of said engine speed $\omega_e$, wherein said control of said engine speed $\omega_e$ is carried out in such a manner that said current speed difference $\Delta\omega_{pres}$ is controlled towards a desired speed difference $\Delta\omega_{des}$ between said engine speed $\omega_e$ and said rotational speed of said at least one driving wheel $\omega_{wheel}$ converted with the gear ratio i between the engine and the driving wheel; and
- control (203) of a clutch (106) **characterised by** control of the clutch (106) from an initial temporary open clutch position $C_{open}$, before a time for a shift operation $t_{gear\_shift}$ which is arranged to occur when a rotational speed of an input shaft (109) $\omega_{gear-in}$ is substantially equal to the wheel speed $\omega_{wheel}$ converted with gear ratios between the wheels and the input shaft (109), towards a clutch position $C_{closed}$, for which a rotational speed of an input shaft (109) in said gearbox (103) $\omega_{gear\_in}$ and said engine speed $\omega_e$ are substantially equal, wherein said clutch position $C_{closed}$ is reached substantially when said current speed difference $\Delta\omega_{pres}$ reaches said desired speed difference $\Delta\omega_{des}$, and wherein the desired speed difference $\Delta\omega_{des}$ is proportionate to a desired value for the time derivative $\dot{Tq}_{fw\_des}$ for said dynamic torque arranged to be used for further control of the time derivative $\dot{Tq}_{fw}$ for the dynamic torque.

**15.** Method according to claim 14, wherein said current speed difference $\Delta\omega_{pres}$ differs from said desired speed difference $\Delta\omega_{des}$ when said driving gear is activated, following which said engine speed $\omega_e$ is controlled in such a manner that said current speed difference $\Delta\omega_{pres}$ approaches said desired speed difference $\Delta\omega_{des}$.

**16.** Method according to any of claims 14-15, wherein said clutch is controlled towards a clutch position $C_{slip}$, at which said clutch (106) slips during a slip time period $T_{slip}$, wherein said driving gear is activated during said slip time period $T_{slip}$.

**17.** Method according to claim 16, wherein said slipping clutch position $C_{slip}$ subsequently moves into said clutch position $C_{closed}$, at which said rotational speed of said input shaft (109) $\omega_{gear-in}$ and said engine speed $\omega_e$ are substantially equal.

**18.** Method according to any of claims 16-17, wherein a play in said powertrain is wound up during said slip time period $T_{slip}$ when said clutch (106) is in said slipping clutch position $C_{slip}$.

**19.** Method according to claim 18, wherein said powertrain during said slip time period $T_{slip}$ is pre-loaded with a slip torque $Tq_{slip}$, which has an insignificant impact on the progress of said vehicle (101).

**20.** Method according to any of claims 18-19, wherein said clutch (106) is controlled towards a clutch position $C_{slip\_more\_closed}$, which is more closed than said slipping clutch position $C_{slip}$, if said play is wound up and said current speed difference $\Delta\omega_{pres}$ has not reached said desired speed difference $\Delta\omega_{des}$.

**21.** Method according to claim 20, wherein a torque ramp is built up when said clutch (106) moves from said slipping clutch position $C_{slip}$ to said more closed clutch position $C_{slip\_more\_closed}$.

**22.** Method according to any of claims 20-21, wherein

- said more closed clutch position $C_{slip\_more\_closed}$ is located between said slipping clutch position $C_{slip}$ and said clutch position $C_{closed}$, for which said rotational speed of said input shaft (109) $\omega_{gear-in}$ and said engine speed $\omega_e$ are substantially equal; and

- a torque $Tq_{slip\_more\_closed}$ transmitted by said clutch (106) at said more closed clutch position $C_{slip\_more\_closed}$ is larger than a torque $Tq_{slip}$ transmitted by said clutch (106) at said slipping clutch position $C_{slip}$, and smaller than a torque $Tq_{closed}$ transmitted by said clutch (106) at said clutch position $C_{closed}$, for which said rotational speed of said input shaft (109) $\omega_{gear\_in}$ and said engine speed $\omega_e$ are substantially equal.

23. Method according to any of claims 14-22, wherein said clutch control device (123) is arranged, at a point in time $t_{close}$, which is determined by having regard to at least one actuation time period $T_{act}$ for said clutch (106), to initiate said control of said clutch (106) towards said clutch position $C_{closed}$, at which said rotational speed of said input shaft (109) $\omega_{gear\_in}$ and said engine speed $\omega_e$ are substantially equal.

24. Method according to any of claims 14-23, wherein said control of said engine speed $\omega_e$ is based on said current speed difference $\Delta\omega_{pres}$, on said desired speed difference $\Delta\omega_{des}$ and on a spring constant $k$ related to a torsional compliance for said powertrain.

25. Method according to claim 24, wherein said spring constant $k$ is one of the group of:

- a spring constant $k_{drive}$ for driving shafts (104, 105) in said vehicle (100), related to a gear ratio $i$ for said powertrain, which dominates said spring constant $k$ for said powertrain; and
- a total spring constant $k_{tot}$ for said powertrain.

26. Method according to any of claims 24-25, wherein said spring constant $k$ is determined by means of one or several of the group:

- a calculation based on a configuration of one or more components in said powertrain, wherein a relation to said spring constant $k$ is known for said one or more components; and
- an, at least in part, continuously adaptive estimation, which estimates said spring constant $k$ during the driving of said vehicle (100).

27. Method according to any of claims 14-26, wherein said engine speed $\omega_e$ is controlled indirectly by way of control of a torque $Tq_{demand}$ requested from said engine (101).

28. Method according to any of claims 14-27, wherein said time derivative $\dot{Tq}_{fw}$ for said dynamic torque is proportionate to said current speed difference $\Delta\omega_{pres}$.

29. Computer program comprising a program code which, when said program code is executed in a computer, achieves that said computer executes the method according to any of claims 14-28.

30. Computer program product comprising a computer-readable medium and a computer program according to claim 29, said computer program being comprised in said computer readable medium.

**Patentansprüche**

1. System, eingerichtet zum Steuern einer Zeitableitung $\dot{Tq}_{fw}$ für ein dynamisches Drehmoment, das für eine Ausgangswelle (102) von einem Motor (101) in einem Fahrzeug (100) bereitgestellt wird, das mit einem in einem Getriebe (103) eingelegten Fahrgang gefahren wird, umfassend:

- eine erste Bestimmungseinheit (121), die zum Bestimmen eines gegenwärtigen Geschwindigkeitsunterschieds $\Delta\omega_{pres}$ zwischen einem ersten Ende eines Antriebsstrangs in dem Fahrzeug (100), das sich mit einer Motorgeschwindigkeit $\omega_e$ dreht, und einem zweiten Ende des Antriebsstrangs eingerichtet ist, das sich mit einer Rotationsgeschwindigkeit zumindest eines Antriebsrads $\omega_{wheel}$ dreht, die mit dem Übersetzungsverhältnis $i$ zwischen dem Motor und dem Antriebsrad umgewandelt ist;
- eine Drehmomentsteuereinheit (122), die dazu eingerichtet ist, eine Steuerung der Motorgeschwindigkeit $\omega_e$ durchzuführen, wobei die Steuerung der Motorgeschwindigkeit $\omega_e$ in einer solchen Weise ausgeführt wird, dass der gegenwärtige Geschwindigkeitsunterschied $\Delta\omega_{pres}$ auf einen gewünschten Geschwindigkeitsunterschied $\Delta\omega_{des}$ zwischen der Motorgeschwindigkeit $\omega_e$ und der Rotationsgeschwindigkeit des zumindest einen Antriebsrads $\omega_{wheel}$ gesteuert wird, die mit dem Übersetzungsverhältnis $i$ zwischen dem Motor und dem Antriebsrad umgewandelt ist; und

- eine Kupplungssteuereinheit (123), die dazu eingerichtet ist, eine Steuerung einer Kupplung (106) durchzuführen, **dadurch gekennzeichnet, dass** die Steuereinheit dazu eingerichtet ist, die Kupplung (106) von einer anfänglichen vorübergehenden offenen Kupplungsposition Copen vor dem Zeitpunkt für einen Schaltbetrieb tgear_shift, der dazu eingerichtet ist, stattzufinden, wenn eine Rotationsgeschwindigkeit der Eingangswelle (109) ωgear_in im Wesentlichen gleich ist wie die Radgeschwindigkeit ωwheel, die mit Übersetzungsverhältnissen zwischen den Rädern und der Eingangswelle (109) umgewandelt ist, zu einer Kupplungsposition Cclosed zu steuern, für welche eine Rotationsgeschwindigkeit einer Eingangswelle (109) in dem Getriebe (103) ωgear_in und die Motorgeschwindigkeit ωe im Wesentlichen gleich sind, wobei die Kupplungsposition Cclosed im Wesentlichen dann erreicht wird, wenn der gegenwärtige Geschwindigkeitsunterschied Δωpres den gewünschten Geschwindigkeitsunterschied Δωdes erreicht, und wobei der gewünschte Geschwindigkeitsunterschied Δωdes proportional zu einem gewünschten Wert für die Zeitableitung tqfw_des für das dynamische Drehmoment ist, der dazu eingerichtet ist, für eine weitere Steuerung der Zeitableitung Ṫqfw für das dynamische Drehmoment verwendet zu werden.

2. System gemäß Anspruch 1, wobei sich der gegenwärtige Geschwindigkeitsunterschied Δωpres von dem gewünschten Geschwindigkeitsunterschied Δωdes unterscheidet, wenn der Fahrgang eingelegt ist, woraufhin die Drehmomentsteuereinheit (122) dazu eingerichtet ist, die Motorgeschwindigkeit ωe in einer solchen Weise zu steuern, dass der gegenwärtige Geschwindigkeitsunterschied Δωpres sich dem gewünschten Geschwindigkeitsunterschied Δω des annähert.

3. System gemäß einem der Ansprüche 1 bis 2, wobei die Kupplungssteuereinheit (123) dazu eingerichtet ist, die Kupplung zu einer Kupplungsposition Cslip zu steuern, bei welcher die Kupplung (106) während eines Schlupfzeitintervalls Tslip schlupft, und wobei der Fahrgang während des Schlupfzeitintervalls Tslip eingelegt ist.

4. System gemäß Anspruch 3, wobei die Kupplungssteuereinheit (123) dazu eingerichtet ist, nach dem Schlupfzeitintervall Tslip die Kupplung zu der Kupplungsposition Cclosed zu steuern, bei welcher die Rotationsgeschwindigkeit der Eingangswelle (109) ωgear_in und die Motorgeschwindigkeit ωe im Wesentlichen gleich sind.

5. System gemäß einem der Ansprüche 3 bis 4, wobei ein Spiel in dem Antriebsstrang während des Schlupfzeitintervalls Tslip aufgebaut wird, wenn sich die Kupplung (106) in der schlupfenden Kupplungsposition Cslip befindet.

6. System gemäß Anspruch 5, wobei der Antriebsstrang während des Schlupfzeitintervalls Tslip mit einem Schlupfdrehmoment Tqslip vorbelastet wird, das einen vernachlässigbaren Einfluss auf das Vorankommen des Fahrzeugs (101) hat.

7. System gemäß einem der Ansprüche 3 bis 6, wobei die Kupplungssteuereinheit (123) dazu eingerichtet ist, die Kupplung (106) zu einer Kupplungsposition Cslip_more_closed zu steuern, die weiter geschlossen ist als die schlupfende Kupplungsposition Cslip, falls das Spiel aufgebaut ist und falls der gegenwärtige Geschwindigkeitsunterschied Δωpres den gewünschten Geschwindigkeitsunterschied Δωdes nicht erreicht hat.

8. System gemäß Anspruch 7, wobei

- die weiter geschlossene Kupplungsposition Cslip_more_closed zwischen der schlupfenden Kupplungsposition Cslip und der Kupplungsposition Cclose angeordnet ist, für welche die Rotationsgeschwindigkeit der Eingangswelle (109) ωgear_in und die Motorgeschwindigkeit ωe im Wesentlichen gleich sind; und
- ein Drehmoment Tqslip_more_close, das von der Kupplung (106) an der weiter geschlossenen Kupplungsposition Cslip_more_closed übertragen wird, größer ist als ein Drehmoment Tqslip, das von der Kupplung (106) an der schlupfenden Kupplungsposition Cslip übertragen wird, und kleiner als ein Drehmoment Tqclosed, das von der Kupplung (106) an der Kupplungsposition Cclosed übertragen wird, für welche die Rotationsgeschwindigkeit der Eingangswelle (109) ωgear_in und die Motorgeschwindigkeit ωe im Wesentlichen gleich sind.

9. System gemäß einem der Ansprüche 1 bis 8, wobei die Kupplungssteuereinheit (123) dazu eingerichtet ist, zu einem Zeitpunkt tclose, der bestimmt wird, indem er Bezug zu wenigstens einem Betätigungszeitintervall Tact für die Kupplung (106) hat, die Steuerung der Kupplung (106) zu der Kupplungsposition Cclosed zu aktivieren, bei welcher die Rotationsgeschwindigkeit der Eingangswelle (109) ωgear_in und die Motorgeschwindigkeit ωe im Wesentlichen gleich sind.

10. System gemäß einem der Ansprüche 1 bis 9, wobei die Drehmomentsteuereinheit (122) dazu eingerichtet ist, die

Steuerung der Motorgeschwindigkeit $\omega$e auf der Grundlage des gegenwärtigen Geschwindigkeitsunterschieds $\Delta\omega$e, des gewünschten Geschwindigkeitsunterschieds $\Delta\omega$des und einer Federkonstanten k auszuführen, die mit einer Torsionsnachgiebigkeit für den Antriebsstrang zusammenhängt.

**11.** System gemäß Anspruch 10, wobei die Federkonstante k eine aus der folgenden Gruppe ist:

- eine Federkonstante kdrive für Antriebswellen (104, 105) in dem Fahrzeug (100), die mit einem Übersetzungsverhältnis i für den Antriebsstrang zusammenhängt, welche die Federkonstante k für den Antriebsstrang dominiert; und
- eine Gesamtfederkonstante ktot für den Antriebsstrang.

**12.** System gemäß einem der Ansprüche 10 bis 11, umfassend eine zweite Bestimmungseinheit, die zum Bestimmen der Federkonstante k mittels einem oder mehreren der folgenden Gruppe eingerichtet ist:

- eine Berechnung auf der Grundlage einer Konfiguration einer oder mehrerer Komponenten in dem Antriebsstrang, wobei eine Beziehung zu der Federkonstanten k für die eine oder die mehreren Komponenten bekannt ist; und
- eine zumindest teilweise kontinuierliche adaptive Schätzung, welche die Federkonstante k während des Fahrens des Fahrzeugs (100) schätzt.

**13.** System gemäß einem der Ansprüche 1 bis 12, wobei die Drehmomentsteuereinheit (122) dazu eingerichtet ist, die Motorgeschwindigkeit $\omega$e mittels einer Steuerung eines Drehmoments Tqdemand zu steuern, das von dem Motor (101) angefordert wird.

**14.** Verfahren zum Steuern einer Zeitableitung $\dot{T}$qfw für ein dynamisches Drehmoment, das für eine Ausgangswelle (102) von einem Motor (101) in einem Fahrzeug (100) bereitgestellt wird, das mit einem in einem Getriebe (103) eingelegten Fahrgang gefahren wird, umfassend:

- ein Bestimmen (201) eines gegenwärtigen Geschwindigkeitsunterschieds $\Delta\omega$pres zwischen einem ersten Ende eines Antriebsstrangs in dem Fahrzeug (100), das sich mit einer Motorgeschwindigkeit $\omega$e dreht, und einem zweiten Ende des Antriebsstrangs eingerichtet ist, das sich mit einer Rotationsgeschwindigkeit zumindest eines Antriebsrads $\omega$wheel dreht, die mit dem Übersetzungsverhältnis i zwischen dem Motor und dem Antriebsrad umgewandelt ist;
- eine Steuerung (202) der Motorgeschwindigkeit $\omega$e, wobei die Steuerung der Motorgeschwindigkeit $\omega$e in einer solchen Weise ausgeführt wird, dass der gegenwärtige Geschwindigkeitsunterschied $\Delta\omega$pres auf einen gewünschten Geschwindigkeitsunterschied $\Delta\omega$des zwischen der Motorgeschwindigkeit $\omega$e und der Rotationsgeschwindigkeit des zumindest einen Antriebsrads $\omega$wheel gesteuert wird, die mit dem Übersetzungsverhältnis i zwischen dem Motor und dem Antriebsrad umgewandelt ist; und
- eine Steuerung (203) einer Kupplung (106), **gekennzeichnet durch** eine Steuerung der Kupplung (106) von einer anfänglichen vorübergehenden offenen Kupplungsposition Copen vor dem Zeitpunkt für einen Schaltbetrieb tgear_shift, der dazu eingerichtet ist, stattzufinden, wenn eine Rotationsgeschwindigkeit der Eingangswelle (109) $\omega$gear_in im Wesentlichen gleich ist wie die Radgeschwindigkeit $\omega$wheel, die mit Übersetzungsverhältnissen zwischen den Rädern und der Eingangswelle (109) umgewandelt ist, zu einer Kupplungsposition Cclosed, für welche eine Rotationsgeschwindigkeit einer Eingangswelle (109) in dem Getriebe (103) $\omega$gear_in und die Motorgeschwindigkeit $\omega$e im Wesentlichen gleich sind, wobei die Kupplungsposition Cclosed im Wesentlichen dann erreicht wird, wenn der gegenwärtige Geschwindigkeitsunterschied $\Delta\omega$pres den gewünschten Geschwindigkeitsunterschied $\Delta\omega$des erreicht, und wobei der gewünschte Geschwindigkeitsunterschied $\Delta\omega$des proportional zu einem gewünschten Wert für die Zeitableitung tqfw_des für das dynamische Drehmoment ist, der dazu eingerichtet ist, für eine weitere Steuerung der Zeitableitung $\dot{T}$qfw für das dynamische Drehmoment verwendet zu werden.

**15.** Verfahren gemäß Anspruch 14, wobei sich der gegenwärtige Geschwindigkeitsunterschied $\Delta\omega$pres von dem gewünschten Geschwindigkeitsunterschied $\Delta\omega$des unterscheidet, wenn der Fahrgang eingelegt ist, woraufhin die Motorgeschwindigkeit $\omega$e in einer solchen Weise gesteuert wird, dass der gegenwärtige Geschwindigkeitsunterschied $\Delta\omega$pres sich dem gewünschten Geschwindigkeitsunterschied $\Delta\omega$des annähert.

**16.** Verfahren gemäß einem der Ansprüche 14 oder 15, wobei die Kupplung zu einer Kupplungsposition Cslip gesteuert wird, bei welcher die Kupplung (106) während eines Schlupfzeitintervalls Tslip schlupft, und wobei der Fahrgang während des Schlupfzeitintervalls Tslip eingelegt ist.

17. Verfahren gemäß Anspruch 16, sich die schlupfende Kupplungsposition Cslip anschließend zu der Kupplungsposition Cclosed bewegt, bei welcher die Rotationsgeschwindigkeit der Eingangswelle (109) ωgear_in und die Motorgeschwindigkeit ωe im Wesentlichen gleich sind.

18. Verfahren gemäß einem der Ansprüche 16 bis 17, wobei ein Spiel in dem Antriebsstrang während des Schlupfzeitintervalls Tslip aufgebaut wird, wenn sich die Kupplung (106) in der schlupfenden Kupplungsposition Cslip befindet.

19. Verfahren gemäß Anspruch 18, wobei der Antriebsstrang während des Schlupfzeitintervalls Tslip mit einem Schlupfdrehmoment Tqslip vorbelastet wird, das einen vernachlässigbaren Einfluss auf das Vorankommen des Fahrzeugs (101) hat.

20. Verfahren gemäß einem der Ansprüche 18 bis 19, wobei die Kupplung (106) zu einer Kupplungsposition Cslip_more_closed gesteuert wird, die weiter geschlossen ist als die schlupfende Kupplungsposition Cslip, falls das Spiel aufgebaut ist und falls der gegenwärtige Geschwindigkeitsunterschied Δωpres den gewünschten Geschwindigkeitsunterschied Δωdes nicht erreicht hat.

21. Verfahren gemäß Anspruch 20, wobei eine Drehmomentrampe aufgebaut wird, wenn sich die Kupplung (106) von der schlupfenden Kupplungsposition Cslip zu der weiter geschlossenen Kupplungsposition Cslip_more_closed bewegt.

22. Verfahren gemäß einem der Ansprüche 20 bis 21, wobei

    - die weiter geschlossene Kupplungsposition Cslip_more_closed zwischen der schlupfenden Kupplungsposition Cslip und der Kupplungsposition Cclose angeordnet ist, für welche die Rotationsgeschwindigkeit der Eingangswelle (109) ωgear_in und die Motorgeschwindigkeit ωe im Wesentlichen gleich sind; und
    - ein Drehmoment Tqslip_more_close, das von der Kupplung (106) an der weiter geschlossenen Kupplungsposition Cslip_more_closed übertragen wird, größer ist als ein Drehmoment Tqslip, das von der Kupplung (106) an der schlupfenden Kupplungsposition Cslip übertragen wird, und kleiner als ein Drehmoment Tqclosed, das von der Kupplung (106) an der Kupplungsposition Cclosed übertragen wird, für welche die Rotationsgeschwindigkeit der Eingangswelle (109) ωgear_in und die Motorgeschwindigkeit ωe im Wesentlichen gleich sind.

23. Verfahren gemäß einem der Ansprüche 14 bis 22, wobei die Kupplungssteuereinheit (123) dazu eingerichtet ist, zu einem Zeitpunkt tclose, der bestimmt wird, indem er Bezug zu wenigstens einem Betätigungszeitintervall Tact für die Kupplung (106) hat, die Steuerung der Kupplung (106) zu der Kupplungsposition Cclosed zu aktivieren, bei welcher die Rotationsgeschwindigkeit der Eingangswelle (109) ωgear_in und die Motorgeschwindigkeit ωe im Wesentlichen gleich sind.

24. Verfahren gemäß einem der Ansprüche 14 bis 23, wobei die Steuerung der Motorgeschwindigkeit ωe auf dem gegenwärtigen Geschwindigkeitsunterschied Δωe, dem gewünschten Geschwindigkeitsunterschied Δωdes und einer Federkonstanten k basiert, die mit einer Torsionsnachgiebigkeit für den Antriebsstrang zusammenhängt.

25. Verfahren gemäß Anspruch 24, wobei die Federkonstante k eine aus der folgenden Gruppe ist:

    - eine Federkonstante kdrive für Antriebswellen (104, 105) in dem Fahrzeug (100), die mit einem Übersetzungsverhältnis i für den Antriebsstrang zusammenhängt, welche die Federkonstante k für den Antriebsstrang dominiert; und
    - eine Gesamtfederkonstante ktot für den Antriebsstrang.

26. Verfahren gemäß einem der Ansprüche 24 bis 25, wobei Federkonstante k mittels einem oder mehreren der folgenden Gruppe bestimmt wird:

    - eine Berechnung auf der Grundlage einer Konfiguration einer oder mehrerer Komponenten in dem Antriebsstrang, wobei eine Beziehung zu der Federkonstanten k für die eine oder die mehreren Komponenten bekannt ist; und
    - eine zumindest teilweise kontinuierliche adaptive Schätzung, welche die Federkonstante k während des Fahrens des Fahrzeugs (100) schätzt.

**27.** Verfahren gemäß einem der Ansprüche 14 bis 26, wobei die Motorgeschwindigkeit ωe mittels einer Steuerung eines Drehmoments Tqdemand indirekt gesteuert wird, das von dem Motor (101) angefordert wird.

**28.** Verfahren gemäß einem der Ansprüche 14 bis 27, wobei die Zeitableitung tqfw_des für das dynamische Drehmoment proportional zu dem gegenwärtigen Geschwindigkeitsunterschied ωpres ist.

**29.** Computerprogramm, umfassend einen Programmcode, der, wenn der Programmcode in einem Computer ausgeführt wird, bewirkt, dass der Computer das Verfahren gemäß einem der Ansprüche 14 bis 28 ausführt.

**30.** Computerprogrammprodukt, umfassend ein computerlesbares Medium und ein Computerprogramm gemäß Anspruch 29, wobei das Computerprogramm in dem computerlesbaren Medium enthalten ist.

**Revendications**

**1.** Système agencé pour la commande d'une dérivée temporelle $Tq_{fw}$ pour un couple dynamique, lequel est fourni à un arbre de sortie (102) à partir d'un moteur (101) dans un véhicule (100) mené avec une roue motrice activée dans une boîte de vitesses (103) comprenant :

   - une première unité de détermination (121), agencée pour la détermination d'une différence de vitesse actuelle $\Delta\omega_{pres}$ entre une première extrémité d'un groupe motopropulseur dans ledit véhicule (100), qui tourne avec une vitesse du moteur $\omega_e$, et une deuxième extrémité dudit groupe motopropulseur, qui tourne avec une vitesse rotationnelle d'au moins une roue d'entraînement $\omega_{wheel}$ convertie avec le rapport d'engrenage i entre le moteur et la roue d'entraînement ;
   - une unité de commande de couple (122), conçue pour réaliser une commande de ladite vitesse du moteur $\omega_e$, ladite commande de ladite vitesse du moteur $\omega_e$ étant réalisé de telle manière à ce que ladite différence de vitesse actuelle $\Delta\omega_{pres}$ soit commandée vers une différence de vitesse souhaitée $\Delta\omega_{des}$ entre ladite vitesse de moteur $\omega_e$ et ladite vitesse rotationnelle de ladite au moins une roue d'entraînement $\omega_{wheel}$ convertie avec le rapport d'engrenage i entre le moteur et la roue d'entraînement ; et
   - une unité de commande d'embrayage (123), conçue pour réaliser une commande d'un embrayage (106), **caractérisé en ce que** l'unité de commande est conçue pour commander l'embrayage (106) d'une position initiale temporaire d'embrayage ouvert $C_{open}$, avant un moment pour une opération de changement de vitesse $t_{gear\_shift}$ qui est conçu pour se passer lorsque une vitesse rotationnelle d'un arbre d'entrée (109) $\omega_{gea\_in}$ est sensiblement égale à la vitesse de la roue $\omega_{wheel}$ convertie avec des rapports de vitesse entre les roues et l'arbre d'entrée (109), vers une position d'embrayage $C_{closed}$, pour laquelle une vitesse rotationnelle d'un arbre d'entrée (109) dans ladite boîte de vitesses (103) $\omega_{gear\_in}$ et ladite vitesse du moteur $\omega_e$ sont sensiblement égales, ladite position d'embrayage $C_{closed}$ étant sensiblement atteinte lorsque ladite différence de vitesse actuelle $\Delta\omega_{pres}$ atteint ladite différence de vitesse souhaitée $\Delta\omega_{des}$, et la différence de vitesse souhaitée $\Delta\omega_{des}$ étant proportionnée à une valeur souhaitée pour la dérivée temporelle $Tq_{fw\_des}$ pour ledit couple dynamique, conçu pour être utilisé pour une commande supplémentaire de la dérivée temporelle $Tq_{fw}$ pour le couple dynamique.

**2.** Système selon la revendication 1, dans lequel ladite différence de vitesse actuelle $\Delta\omega_{pres}$ diffère de ladite différence de vitesse souhaitée $\Delta\omega_{des}$ lorsque ladite roue motrice est activée, suivant ladite unité de commande de couple (122) qui est agencée pour commander ladite vitesse du moteur $\omega_e$ de telle manière à ce que ladite différence de vitesse actuelle $\Delta\omega_{pres}$ s'approche de ladite différence de vitesse souhaitée $\Delta\omega_{des}$.

**3.** Système selon l'une quelconque des revendications 1 à 2, dans lequel ladite unité de commande d'embrayage (123) est agencée pour commander ledit embrayage vers une position d'embrayage $C_{slip}$, à laquelle ledit embrayage (106) glisse pendant une période de temps de glissement $T_{slip}$, et dans lequel ladite roue motrice est activée pendant ladite période de temps de glissement $T_{slip}$.

**4.** Système selon la revendication 3, dans lequel ladite unité de commande d'embrayage (123) est conçue, après ladite période de temps de glissement $T_{slip}$, pour commander ledit embrayage vers ladite position d'embrayage $C_{closed}$, à laquelle ladite vitesse rotationnelle dudit arbre d'entrée (109) $\omega_{gear\_in}$ et ladite vitesse du moteur $\omega_e$ sont sensiblement égales.

**5.** Système selon l'une quelconque des revendications 3 à 4, dans lequel une pièce dans ledit groupe motopropulseur est enroulée pendant ladite période de temps de glissement $T_{slip}$ lorsque ledit embrayage (106) se trouve dans ladite position de glissement d'embrayage $C_{slip}$.

6. Système selon la revendication 5, dans lequel ledit groupe motopropulseur pendant ladite période de temps de glissement $T_{slip}$ est préchargé avec un couple de glissement $Tq_{slip}$, qui a un impact négligeable sur la progression dudit véhicule (101) .

7. Système selon l'une quelconque des revendications 3 à 6, dans lequel ladite unité de commande d'embrayage (123) est conçue pour commander ledit embrayage (106) vers une position d'embrayage $C_{slip\_more\_closed}$, qui est davantage fermée que ladite position de glissement d'embrayage $C_{slip}$, si ladite pièce est enroulée et ladite différence de vitesse actuelle $\Delta\omega_{pres}$ n'a pas atteint ladite différence de vitesse souhaitée $\Delta\omega_{des}$.

8. Système selon la revendication 7, dans lequel

   - ladite position d'embrayage davantage fermée $C_{slip\_more\_closed}$ est située entre ladite position de glissement d'embrayage $C_{slip}$ et ladite position d'embrayage $C_{closed}$, pour laquelle ladite vitesse rotationnelle dudit arbre d'entrée (109) $\omega_{gear\_in}$ et ladite vitesse du moteur $\omega_e$ sont sensiblement égales ; et
   - un couple $Tq_{slip\_more\_closed}$ transmis par ledit embrayage (106) au niveau de ladite position d'embrayage davantage fermée $C_{slip\_more\_closed}$ est supérieur à un couple $Tq_{slip}$ transmis par ledit embrayage (106) au niveau de ladite position de glissement d'embrayage $C_{slip}$, et inférieur à un couple $Tq_{closed}$ transmis par ledit embrayage (106) au niveau de ladite position d'embrayage $C_{closed}$, pour laquelle ladite vitesse rotationnelle dudit arbre d'entrée (109) $\omega_{gear\_in}$ et ladite vitesse du moteur $\omega_e$ sont sensiblement égales.

9. Système selon l'une quelconque des revendications 1 à 8, dans lequel ladite unité de commande d'embrayage (123) est conçue, à un point dans le temps $t_{closed}$ qui est déterminé comme étant en rapport avec au moins une période de temps d'actionnement $T_{act}$ pour ledit embrayage (106), afin de débuter ladite commande dudit embrayage (106) vers ladite position d'embrayage $C_{closed}$, à laquelle ladite vitesse rotationnelle dudit arbre d'entrée (109) $\omega_{gea\_in}$ et ladite vitesse du moteur $\omega_e$ sont sensiblment égales.

10. Système selon l'une quelconque des revendications 1 à 9, dans lequel ladite unité de commande de couple (122) est conçue pour réaliser ladite commande de ladite vitesse de moteur $\omega_e$, sur la base de ladite différence de vitesse actuelle $\Delta\omega_{pres}$, de ladite différence de vitesse souhaitée $\Delta\omega_{des}$ et d'une constante de ressort $k$ concernant une souplesse de torsion pour ledit groupe motopropulseur.

11. Système selon la revendication 10, dans lequel ladite constante de ressort $k$ est un élément du groupe suivant :

   - une constante de ressort $k_{drive}$ pour des arbres moteurs (104, 105) dans ledit véhicule (100), concernant un rapport de vitesses $i$ pour ledit groupe motopropulseur, qui domine ladite constante de ressort $k$ pour ledit groupe motopropulseur ; et
   - une constante de ressort totale $k_{tot}$ pour ledit groupe motopropulseur.

12. Système selon l'une quelconque des revendications 10 à 11, comprenant une deuxième unité de détermination, conçue pour la détermination de ladite constante de ressort $k$ au moyen d'au moins un élément du groupe suivant :

   - un calcul sur la base d'une configuration d'au moins un composant dans ledit groupe motopropulseur, dans lequel un rapport avec ladite constante de ressort $k$ est connu pour ledit au moins un composant ; et
   - au moins en partie, une estimation adaptative continue, qui estime ladite constante de ressort $k$ pendant l'entraînement dudit véhicule (100).

13. Système selon l'une quelconque des revendications 1 à 12, dans lequel ladite unité de commande de couple (122) est agencée pour commander indirectement ladite vitesse de moteur $\omega_e$ au moyen de la commande d'un couple $Tq_{demand}$ requise dudit moteur (101).

14. Procédé pour la commande d'une dérivée temporelle $Tq_{fw}$ pour un couple dynamique, lequel est fourni à un arbre de sortie (102) à partir d'un moteur (101) dans un véhicule (100) mené avec une roue motrice activée dans une boîte de vitesses (103), comprenant :

   - la détermination (201) d'une différence de vitesse actuelle $\Delta\omega_{pres}$ entre une première extrémité d'un groupe motopropulseur dans ledit véhicule (100), qui tourne avec une vitesse du moteur $\omega_e$, et une deuxième extrémité dudit groupe motopropulseur, qui tourne avec une vitesse d'au moins une roue d'entraînement convertie avec le rapport de vitesse entre le moteur et la roue d'entraînement $\omega_{\text{wheel}}$ ;

- la commande (202) de ladite vitesse du moteur $\omega_e$, ladite commande de ladite vitesse du moteur $\omega_e$ étant réalisé de telle manière à ce que ladite différence de vitesse actuelle $\Delta\omega_{pres}$ soit commandée vers une différence de vitesse souhaitée $\Delta\omega_{des}$ entre ladite vitesse de moteur $\omega_e$ et ladite vitesse rotationnelle de ladite au moins une roue d'entraînement $\omega_{\text{wheel}}$ convertie avec le rapport de vitesse i entre le moteur et la roue d'entraînement ; et

- la commande (203) d'un embrayage (106) **caractérisée par** la commande de l'embrayage (106) d'une position initiale d'ouverture temporaire d'embrayage $C_{open}$, avant un moment pour une opération de changement de vitesse $t_{gear\_shift}$ qui est conçue pour se passer lorsqu'une vitesse rotationnelle d'un arbre d'entrée (109) $\omega_{gear\_in}$ est sensiblement égale à la vitesse de la roue $\omega_{\text{wheel}}$ convertie avec des rapports de vitesse entre les roues et l'arbre d'entrée (109), vers une position d'embrayage $C_{closed}$, pour laquelle une vitesse rotationnelle d'un arbre d'entrée (109) dans ladite boîte de vitesses (103) $\omega_{gea\_in}$ et ladite vitesse de moteur $\omega_e$ sont sensiblement égales, ladite position d'embrayage $C_{closed}$ étant sensiblement atteinte lorsque ladite différence de vitesse actuelle $\Delta\omega_{pres}$ atteint ladite différence de vitesse souhaitée $\Delta\omega_{des}$, et la différence de vitesse souhaitée $\Delta\omega_{des}$ étant proportionnée à une valeur souhaitée pour la dérivée temporelle $Tq_{fw\_des}$ pour ledit couple dynamique conçu pour être utilisé pour une commande supplémentaire de la dérivée temporelle $Tq_{fw}$ pour le couple dynamique.

**15.** Procédé selon la revendication 14, dans lequel ladite différence de vitesse actuelle $\Delta\omega_{pres}$ diffère de ladite différence de vitesse souhaitée $\Delta\omega_{des}$ lorsque ladite roue motrice est activée, suivant laquelle ladite vitesse de moteur $\omega_e$ est commandée de telle manière à ce que ladite différence de vitesse actuelle $\Delta\omega_{pres}$ s'approche de ladite différence de vitesse souhaitée $\Delta\omega_{des}$.

**16.** Procédé selon l'une quelconque des revendications 14 à 15, dans lequel ledit embrayage est commandé vers une position d'embrayage $C_{slip}$, à laquelle ledit embrayage (106) glisse pendant une période de temps de glissement $T_{slip}$, ladite roue motrice étant activée pendant ladite période de temps de glissement $T_{slip}$.

**17.** Procédé selon la revendication 16, dans lequel ladite position de glissement d'embrayage $C_{slip}$ se déplace par la suite dans ladite position d'embrayage $C_{closed}$, à laquelle ladite vitesse rotationnelle dudit arbre d'entrée (109) $\omega_{gea\_in}$ et ladite vitesse de moteur $\omega_e$ sont sensiblement égales.

**18.** Procédé selon l'une quelconque des revendications 16 à 17, dans lequel une pièce dans ledit groupe motopropulseur est enroulée pendant ladite période de temps de glissement $T_{slip}$ lorsque ledit embrayage (106) se trouve dans ladite position de glissement d'embrayage $C_{slip}$.

**19.** Procédé selon la revendication 18, dans lequel ledit groupe motopropulseur pendant ladite période de temps de glissement $T_{slip}$ est préchargé avec un couple de glissement $Tq_{slip}$, qui a un impact négligeable sur la progression dudit véhicule (101) .

**20.** Procédé selon l'une quelconque des revendications 18 à 19, dans lequel ledit embrayage (106) est commandé vers une position d'embrayage $C_{slip\_more\_closed}$ qui est davantage fermée que ladite position de glissement d'embrayage $C_{slip}$, si ladite pièce est enroulée et ladite différence de vitesse actuelle $\Delta\omega_{pres}$ n'a pas atteint ladite différence de vitesse souhaitée $\Delta\omega_{des}$.

**21.** Procédé selon la revendication 20, dans lequel une rampe de couple est construite lorsque ledit embrayage (106) se déplace de ladite position de glissement d'embrayage $C_{slip}$ vers ladite position d'embrayage davantage fermée $C_{slip\_more\_closed}$.

**22.** Procédé selon l'une quelconque des revendications 20 à 21, dans lequel

- ladite position d'embrayage davantage fermée $C_{slip\_more\_closed}$ est située entre ladite position de glissement d'embrayage $C_{slip}$ et ladite position d'embrayage $C_{closed}$, pour laquelle ladite vitesse rotationnelle dudit arbre d'entrée (109) $\omega_{gear\_in}$ et ladite vitesse du moteur $\omega_e$ sont sensiblement égales ; et

- un couple $Tq_{slip\_more\_closed}$ transmis par ledit embrayage (106) au niveau de ladite position d'embrayage davantage fermée $C_{slip\_more\_closed}$ est supérieur à un couple $Tq_{slip}$ transmis par ledit embrayage (106) au niveau de ladite position de glissement d'embrayage $C_{slip}$, et inférieur à un couple $Tq_{closed}$ transmis par ledit embrayage (106) au niveau de ladite position d'embrayage $C_{closed}$, pour laquelle ladite vitesse rotationnelle dudit arbre

d'entrée (109) $\omega_{gea\_in}$ et ladite vitesse du moteur $\omega_e$ sont sensiblement égales.

23. Procédé selon l'une quelconque des revendications 14 à 22, dans lequel ledit dispositif de commande d'embrayage (123) est conçu, à un point dans le temps $T_{close}$ qui est déterminé comme relatif à au moins une durée d'actionnement $T_{act}$ pour ledit embrayage (106), pour débuter ladite commande dudit embrayage (106) vers ladite position d'embrayage $C_{closed}$, à laquelle ladite vitesse rotationnelle dudit arbre d'entrée (109) $\omega_{gear\_in}$ et ladite vitesse de moteur $\omega_e$ sont sensiblement égales.

24. Procédé selon l'une quelconque des revendications 14 à 23, dans lequel ladite commande de ladite vitesse de moteur $\omega_e$ est basée sur ladite différence de vitesse actuelle $\Delta\omega_{pres}$, sur ladite différence de vitesse souhaitée $\Delta\omega_{des}$ et sur une constante de ressort $k$ concernant une souplesse de torsion pour ledit groupe motopropulseur.

25. Procédé selon la revendication 24, dans lequel ladite constante de ressort $k$ est un élément du groupe suivant :

   - une constante de ressort $k_{drive}$ pour des arbres moteurs (104, 105) dans ledit véhicule (100), concernant un rapport de vitesse *i pour* ledit groupe motopropulseur, qui domine ladite constante de ressort $k$ pour ledit groupe motopropulseur ; et
   - une constante de ressort totale $k_{tot}$ pour ledit groupe motopropulseur.

26. Procédé selon l'une quelconque des revendications 24 à 25, dans lequel ladite constante de ressort $k$ est déterminée au moyen d'au moins élément du groupe suivant :

   - un calcul sur la base d'une configuration d'au moins un composants dans ledit groupe motopropulseur, dans lequel une relation à ladite constante de ressort $k$ est connue pour ledit au moins un composant ; et
   - au moins en partie, une estimation adaptative continue, qui estime ladite constante de ressort $k$ pendant la commande dudit véhicule (100).

27. Procédé selon l'une quelconque des revendications 14 à 26, dans lequel ladite vitesse du moteur $\omega_e$ est commandée indirectement au moyen d'une commande d'un couple $Tq_{demand}$ requis dudit moteur (101).

28. Procédé selon l'une quelconque des revendications 14 à 27, dans lequel ladite dérivée temporelle $Tq_{fw}$ pour ledit couple dynamique est proportionnée à ladite différence de vitesse actuelle $\Delta\omega_{pres}$.

29. Programme informatique comprenant un code de programme qui, lorsque ledit code de programme est exécuté dans un ordinateur, obtient que ledit ordinateur exécute le procédé selon l'une quelconque des revendications 14 à 28.

30. Produit de programme informatique comprenant un support lisible par ordinateur et un programme informatique selon la revendication 29, ledit programme informatique étant compris dans ledit support lisible par ordinateur.

FIG. 1

[201]
Determine current
Speed difference
$\omega_{pres}$

[202]
Control the engine speed
$\omega_e$ towards a desired
speed difference $\Delta\omega_{des}$

[203]
Control clutch towards a
clutch position $C_{closed}$ so
that this clutch position
$C_{closed}$ is reached when the
current
speed difference $\omega_{pres}$
is substantially equal to
the desired speed difference
$\Delta\omega_{des}$

Fig. 2

Fig. 3

Fig. 7a

Fig. 7b

Fig. 7c

FIG. 4a

FIG. 4b

Dynamic torque

Play

Time

Engine speed

$\omega_{gear\_in}$
$\omega_e$

$\Delta\omega_{des}$

$\omega_{wheel}$

Time

Gear

$V_{n+1}$

$V_n$

Time

Clutch position

$C_{slip}$

$C_{closed}$

Time

$t_{gear\_shift}$

FIG. 5a

Dynamic torque

Play

Time

Engine speed

$\omega_e$

$\omega_{gear\_in}$

$\Delta\omega_{pres}$

$\Delta\omega_{des}$

$\omega_{wheel}$

Time

Gear

$V_{n+1}$

$V_n$

Time

Clutch position

$C_{open}$

$C_{slip}$

$C_{slip\_more\_closed}$

$C_{closed}$

Time

$T_{slip}$

$T_{open}$

$T_{slip\_more\_closed}$

$t_{gear\_shift}$

$t_{close}$

$t_{more\_closed}$

FIG. 5b

Transmitted torque,
clutch

$Tq_{clutch\_closed}$

$\alpha \sim Tq_{clutch\_slip\_more\_closed} \rightarrow \Delta\omega_{des}$

$Tq_{clutch\_slip}$

$Tq_{clutch\_open}$

$T_{slip}$

$T_{slip\_more\_closed}$

Time

$t_{gear\_shift}$

$t_{close}$

$t_{more\_closed}$

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005239595 A
- US 2013310219 A

- US 2008248922 A